# EUROPEAN PATENT SPECIFICATION

(11) **EP 2 508 373 B1**
(45) Date of publication and mention of the grant of the patent: **17.08.2016**
(21) Application number: 10832924.4
(22) Date of filing: 25.08.2010
(51) Int. Cl.: B60H 1/22, B60H 1/00

(54) **AIR-CONDITIONING SYSTEM FOR VEHICLE**
KLIMAANLAGENSYSTEM FÜR EIN FAHRZEUG
SYSTÈME DE CLIMATISATION POUR VÉHICULE

(30) Priority: 30.11.2009 JP 2009272307
(43) Date of publication of application: 10.10.2012
(73) Proprietor: Hitachi, Ltd., Chiyoda-ku Tokyo 100-8280 (JP)
(72) Inventor: OSAKA, Tadashi, Tokyo 100-8220 (JP); SEKIYA, Sachio, Tokyo 100-8220 (JP); SAWADA, Itsuro, Tokyo 100-8220 (JP); IMANISHI, Yuto, Tokyo 100-8220 (JP)
(74) Representative: MERH-IP Matias Erny Reichl Hoffmann Patentanwälte PartG mbB
(86) International application number: PCT/JP2010/064393
(87) International publication number: WO 2011/065077

(56) References cited:
- FR-A1- 2 780 349
- FR-A1- 2 864 854
- JP-A- 6 171 346
- JP-A- 8 268 036
- JP-A- 2002 248 932
- JP-A- 2003 306 021
- JP-A- 2004 146 144
- JP-A- 2007 269 161
- JP-A- 2008 285 126
- JP-A- 2008 285 126
- JP-A- 2008 308 080
- US-A1- 2006 259 219
- US-A1- 2008 295 535

## Description

### TECHNICAL FIELD

The present invention relates to an air-conditioning system for a vehicle, such as disclosed in US 2008/0295535 A1.

### BACKGROUND ART

In the field of hybrid vehicles, there are known systems for use in air-conditioning in which heat generated by an heat-generating body such as a motor or an inverter installed in a vehicle is used for air-conditioning (see Patent Literatures 1 and 2). According to the invention disclosed in the Patent Literature 1, it is possible to implement cooling of equipment and air-cooling simultaneously by using a refrigeration cycle.
According to the invention disclosed in the Patent Literature 2, there is provided a technology for heating the blowing air of air-conditioning with both the heat generated by a heat pump type air-cooling apparatus and the heat generated by a heater during air-heating.

In JP 2008 285126 A, a control unit for air conditioning comprises, a means for acquiring information of energy recovery interval for acquiring the information regarding the energy recovery interval, a vehicle room temperature change predicting means for predicting the vehicle room temperature change, and an air condition control means for controlling an air conditioner based on the predicted result of the vehicle room temperature change predicting means and the information regarding the energy recovery interval.

In US 2006 259219 A1, a vehicle climate control apparatus and method realizing a satisfactory drive feeling and in-compartment comfort, at the same time, by estimating the behavioral intention of the driver at an early time is shown. The vehicle climate control apparatus comprises an air-conditioning control unit for controlling the air-conditioning state in the compartments by controlling the air-conditioning device, a driving behavior detection unit for detecting the operation amounts of the driver, an estimation unit for calculating the behavioral intention estimating information for estimating the prospective driving behavior of the driver based on the operation amounts detected by the driving behavior detection unit.

In FR 2780349 A1, a system including a connection module adapted to communicate with a navigation system for controlling the temperature and flow of air in the vehicle cabin, as a function of the information transmitted by the navigation system is shown. The system includes a receiver connected to the input, this receiver is arranged to deliver data associated with the geographic position of the vehicle.

### CITATION LIST

### PATENT LITERATURE

[Patent Literature 1] Japanese Patent No. 4285292.
[Patent Literature 2] Japanese Patent Application Laid-open Publication No. 2008-230594

### SUMMARY OF INVENTION

### TECHNICAL PROBLEM

In case that cooling or warming of each of equipment (motor, inverter, battery and so on) mounted on a vehicle and air-cooling and air-heating of the vehicle interior are performed by a single air-conditioning system, it is necessary to bring the equipment and the vehicle interior to a target temperatures effectively.

### SOLUTION TO PROBLEM

According to the 1 st aspect, an air-conditioning system for a vehicle for performing cooling/air-heating of a temperature controlling object, comprises: a temperature detection unit that detects a temperature of the temperature controlling object; a controller that controls the air-conditioning system based on a temperature detected by the temperature detection unit; a prediction unit that predicts a forward temperature of the temperature controlling object based on at least either one of a detected temperature detected by the temperature detection unit and a current vehicle driving state; a target temperature change unit that changes a target temperature of the temperature controlling object or a target temperature of a cooling medium in the air-conditioning system for a vehicle based on a result of prediction by the prediction unit; wherein the controller controls cooling/air-heating of the temperature controlling object based on a target temperature changed by the target temperature change unit.

The 1 st aspect further comprises: a refrigeration cycle circuit having a compressor that compresses a first cooling medium and a first heat exchanger that exchanges heat between the first cooling medium and external air; a cooling circuit that circulates a second cooling medium to the temperature controlling object to perform cooling/air-heating of the temperature controlling object; and a second heat exchanger that exchanges heat between the first cooling medium and the second cooling medium, wherein the target temperature change unit changes a target temperature of the temperature controlling object or a target temperature of the second cooling medium based on a result of prediction by the prediction unit, and the controller controls the refrigeration cycle circuit and the cooling circuit based on a temperature detected by the temperature detection unit and a target temperature changed by the target temperature change unit to control cooling/air-heating of the temperature controlling object.

It is preferred that the vehicle driving state includes a vehicle speed and an accelerator pedal depressing amount input from vehicle side, and the prediction unit predicts a forward temperature of the temperature controlling object based on the vehicle speed, the accelerator pedal depressing amount and a detected temperature detected by the temperature detection unit.

According to another aspect of the present invention, it is preferred that the prediction unit predicts a forward temperature taking into consideration a travel plan information that is input from a navigation unit provided to the vehicle.

According to another aspect, an air-conditioning system for a vehicle comprises: a refrigeration cycle circuit having a compressor that compresses a first cooling medium and a first heat exchanger that exchanges heat between the first cooling medium and external air; a cooling circuit that circulates a second cooling medium to a temperature controlling object to perform cooling/air-heating of the temperature controlling object; a second heat exchanger that exchanges heat between the first cooling medium and the second cooling medium; a temperature detection unit that detects a temperature of the object of temperature adjustment; a controller that controls the refrigeration cycle circuit and the cooling circuit based on a temperature detected by the temperature detection unit; a prediction unit that predicts a forward vehicle travel state based on a travel plan information that is input from a navigation device provided to the vehicle; and a target temperature change unit that changes an target temperature of the temperature controlling object or a target temperature of the second cooling medium based on a result of prediction by the prediction unit; wherein the controller controls the refrigeration cycle circuit and the cooling circuit based on a target temperature changed by the target temperature change unit to control cooling/air-heating of the temperature controlling object.

According to another aspect, it is preferred that the temperature controlling object includes a vehicle interior and an equipment for electric-powered driving, and the controller performs cooling/air-heating of the vehicle interior and the equipment for electric-powered driving based on the target temperature, when the prediction unit predicts a vehicle state of before start driving.

According to another aspect, it is preferred that the temperature controlling object includes a battery for vehicle driving, and the controller controls cooling/air-heating for the battery for vehicle driving by the cooling circuit so that during charging a temperature of the battery for vehicle driving falls within a predetermined temperature range in which the battery for vehicle driving exhibits optimal charging/discharging efficiency, when the prediction unit predicts a charging of the battery for vehicle driving.

According to another aspect, it is preferred that during the charging, the refrigeration cycle circuit and the cooling circuit are driven by power of an external power source that is used in charging the battery for vehicle driving.

According to another aspect of the present invention, in an air-conditioning system for a vehicle, it is preferred that the temperature controlling object includes a vehicle interior and an equipment for electric-powered driving, and the controller performs controlling of cooling/air-heating of the equipment for electric-powered driving with higher priority over controlling of cooling/air-heating of the vehicle interior, when a temperature of the equipment for electric-powered driving is in the vicinity of the target temperature.

### ADVANTAGEOUS EFFECT OF THE INVENTION

According to the present invention, it is possible to perform cooling/air-heating of an object of temperature control efficiently.

### BRIEF DESCRIPTION OF THE DRAWINGS

[FIG. 1] FIG. 1 shows a schematic block diagram of the structure of an air-conditioning system for a vehicle according to the present invention;
[FIG. 2] FIG. 2 is a diagram illustrating an air-cooling operation;
[FIG. 3] FIG. 3 is a diagram illustrating a dehumidifying operation;
[FIG. 4] FIG. 4 is a diagram illustrating an air-heating operation;
[FIG. 5] FIG. 5 is a diagram illustrating an air-heating/equipment-cooling operation;
[FIG. 6] FIG. 6 is a diagram illustrating a equipment-heating operation;
[FIG. 7] FIG. 7 is a diagram showing a cooling construction of a gearbox, with (a) showing a first example thereof and (b) showing a second example thereof;
[FIG. 8] FIG. 8 is a diagram showing temperature conditions for every object of temperature controlling:
[FIG. 9] FIG. 9 is a diagram illustrating arrangement of a plurality of pieces of temperature controlling object equipment 9, showing a case of serial arrangement;
[FIG. 10] FIG. 10 is a diagram illustrating an arrangement of a plurality of object equipments 9 for temperature control, where the equipments are in parallel arrangement; [FIG. 11] FIG. 11 is a flowchart showing a program for control processing;
[FIG. 12] FIG. 12 is a diagram showing relationship between the external air temperature and the air-conditioning of vehicle interior and each equipment;
[FIG. 13] FIG. 13 is a diagram illustrating an example of prediction of temperature variation, with (a) showing a change of accelerator pedal depressing amount, (b) showing a variation of temperature of a motor or an inverter, and (c) showing a variation of temperature of an equipment cooling medium 41B.
[FIG. 14] FIG. 14 illustrates an example of processing in which cooling performance for the equipments will be increased, indicating a case in which compressor 1, circulation pump 5B, and exterior fan 3 can be variably controlled;
[FIG. 15] FIG. 15 shows an example of processing in which cooling performance for the equipments is increased, indicating a case in which the compressor 1, the circulation pump 5B, and the exterior fan 3 are on-off controlled;
[FIG. 16] FIG. 16 is a diagram showing an example of control in which cooling performance for the equipments is decreased, with (a) indicating a case that the compressor 1, the circulation pump 5B, and the exterior fan 3 can be variably controlled, and (b) indicating a case that the compressor 1, the circulation pump 5B, and the exterior fan 3 are on-off controlled;
[FIG. 17] FIG. 17 is a diagram illustrating examples how the controlling temperatures are set for various vehicle states and for temperature controlling objects (vehicle interior, equipments);
[FIG. 18] FIG. 18 is a diagram illustrating an example of cooling and heating control when battery is charged; and
[FIG. 19] FIG. 19 is a diagram showing a construction of EV1000 driving system and electrical connection of components in a portion of the driving system that comprises an electric-motor driving system that.

### DESCRIPTION OF EMBODIMENTS

Hereafter, embodiments of the present invention are explained. In the following embodiments, the present invention is explained with an example where it is assumed that the present invention is applied to an air-conditioning system of a pure electric vehicle that employs an electric motor as a sole drive power source for the vehicle.

The configuration of the embodiment explained below may be applied as a vehicular air-conditioning systems for electric vehicles that employs as drive power sources both an engine that is an internal combustion engine and an electric motor, for example, hybrid vehicles (passenger cars), hybrid trucks, hybrid buses and so on.

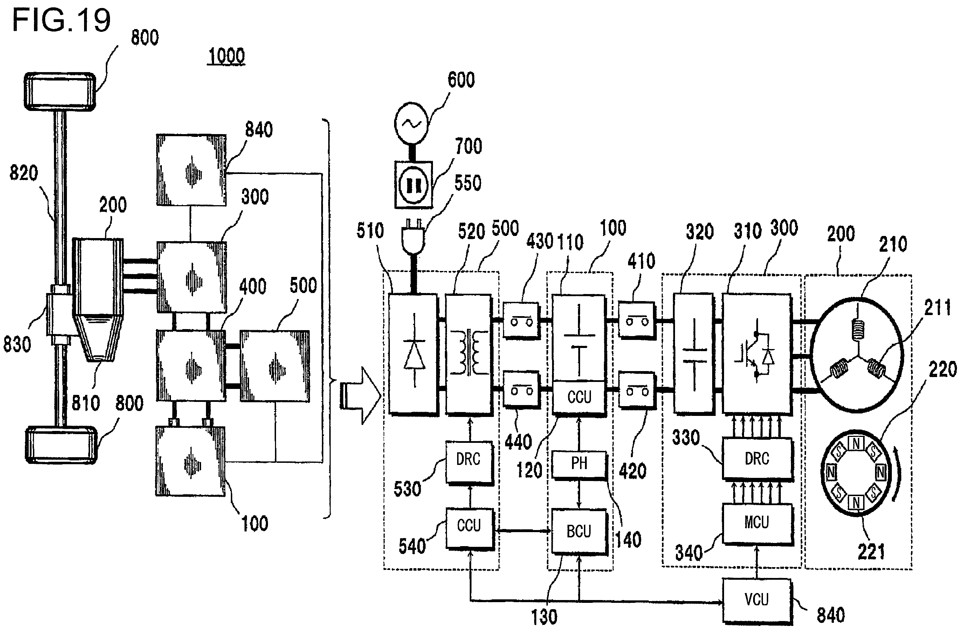

First, referring to FIG. 19, explanation is made on an electric-motor driving system for a pure electric vehicle (hereafter, simply referred to as "EV") to which the vehicular air-conditioning system according to the present invention is applied. FIG. 19 shows a configuration of the drive system EV1000 and electrical connection of each component in an electric-motor drive system that constitutes a part thereof. Note that in FIG. 19, thick solid lines indicate high voltage lines and thin solid lines indicate low voltage lines.

An axle 820 is rotatably supported in the front portion or rear portion of the vehicle body (not shown). On both ends of the axle 820 are provided a pair of driving wheels 800. Though not shown, at the rear portion or the front portion of the vehicle body is rotatably supported an axle provided with a pair of non-driving wheels on both ends thereof. EV1000 shown in FIG. 19 is of a front-wheel drive type having the driving wheels 800 as front wheels and the non-driving wheels as rear wheels. However, a rear-wheel drive type having drive wheels 800 as rear wheels and the driving wheels as front wheels may also be used.

In the midportion of the axle 820 is provided a differential gear (hereafter, referred to as "DIF") 830. The axle 820 is mechanically connected to the output side of the DIF 830. To the input side of DIF 830 is mechanically connected an output shaft of a transmission 810. DIF 830 is a differential power distribution mechanism that distributes rotative drive force transmitted via the transmission 810 with speed change to the left and right vehicle axles 820. To the input side of the transmission 810 is mechanically connected the output side of a motor generator 200.

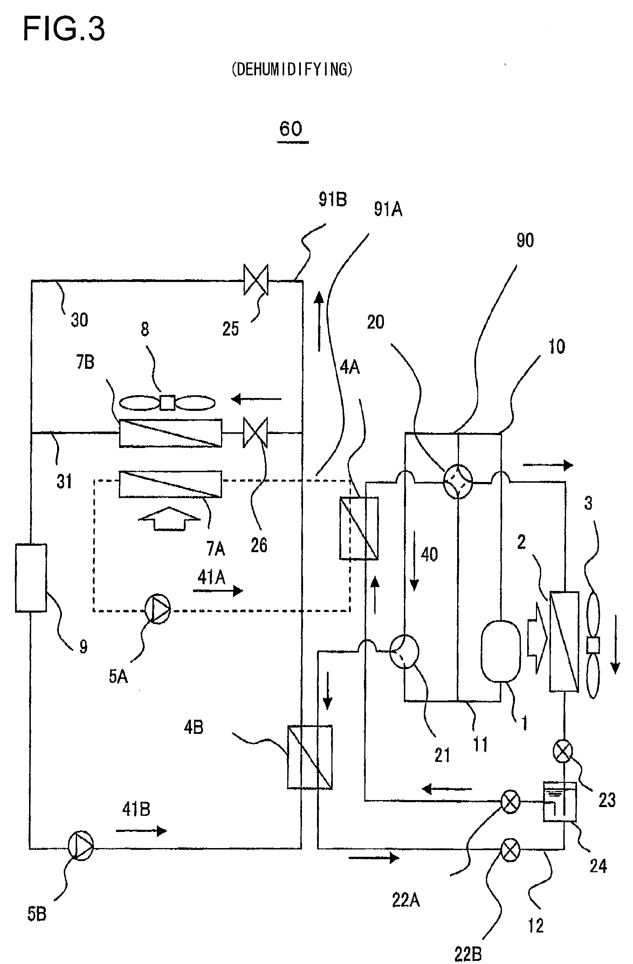

The motor generator 200 is a rotating electrical machine that includes an armature (corresponding to the stator in EV 1000 shown in FIG. 3) 210 provided with armature winding 211 and a field system 220 provided with a permanent magnet 221 (corresponding to the rotor in EV 1000 shown in FIG. 3) and arranged opposite to the armature 210 via a gap. The motor generator 200 functions as a motor when EV 1000 is on power driving and as a generator when it is regenerating.

When the motor generator 200 functions as a motor, electric energy accumulated in a battery 100 is supplied to the winding of the armature 211 through an inverter 300. As a result, the motor generator 200 generates rotative power (mechanical energy) due to magnetic interaction between the armature 210 and the field system 220. The rotative power output from the motor generator 200 is transmitted to the axle 820 via the transmission 810 and DIF 830 to drive the driving wheels 800.

When the motor generator 200 functions as a generator, the mechanical energy (rotative power) transmitted from the driving wheels 800 is transmitted to the motor generator 200 to drive the motor generator 200. In this manner, when the motor generator 200 is driven, the magnetic fluxes of the field system 220 interlink with the winding 211 of the armature to induce voltage. Due to this, the motor generator generates power. The power output from the motor generator 200 is supplied to the battery 100 through the inverter 300. As a result, the battery 100 is charged.

The motor generator 200, particularly the temperature of the armature 210 is controlled by the heat cycling system explained later such that the temperature falls within an allowable temperature range. The armature is a heat generating component, so that it is necessary to cool it. When ambient temperature is relatively low, it may sometimes be necessary to warm it in order to obtain specified electric properties.

The motor generator 200 is driven by controlling electric power by the inverter 300 between the armature 210 and the battery 100. That is, the inverter 300 is a control device for the motor generator 200. The inverter 300 is a power converting device that converts the power from direct current to alternating current or from alternating current to direct current by switching actions of a switching semiconductor element. The inverter 300 includes a power module 310, a drive circuit 330, an electrolytic capacitor 320, and a motor controller 340. The drive circuit 330 drives a switching semiconductor devices implemented in the power module 310. The electrolytic capacitor 320 is electrically connected with the direct current side of the power module 310 in parallel to smooth the direct current voltage. The motor controller 340 generates a switching command for switching semiconductor devices of the power module 310, and outputs a signal corresponding to the switch command to the drive circuit 330.

The power module 310 includes three series circuits (each series circuit is an arm for one phase) for three phases, wherein each of series circuit (arm for one phase) comprises two switching semiconductor devices (one for an upper arm and the other for lower arm) electrically connected in series. The power module 310 comprises six switching semiconductor devices which are implemented on a substrate and are electrically connected with a connection conductor such as an aluminum wire, so that three series circuits corresponding to three phases are electrically connected in parallel (three-phase bridge connection) to constitute a power conversion circuit.

As the switching semiconductor device, use is made of a metal oxide film semiconductor field effect transistor (MOSFET) or an insulated gate type bipolar transistor (IGBT). Here, in case where the power conversion circuit is constituted by MOSFET, a parasitic diode is present between a drain electrode and a source electrode, so that it is unnecessary to separately provide a diode device therebetween. On the other hand, in case where the power conversion circuit is constituted by IGBT, no diode element exists between a collector electrode and an emitter electrode, so that it is necessary to electrically connect a diode device with reversed direction in parallel between the collector electrode and the emitter electrode.

One side of each upper arm, which is the side opposite to a side that is connected to a lower arm, i.e. collector electrode side in the case of IGBT, is extending to outside from a direct current side of the power module 310 and is connected to a positive electrode side of the battery 100. The other side of each lower arm, which is the side opposite to a side that is connected to an upper arm (emitter electrode side in the case of IGBT) to outside from a direct current side of the power module 310 and is connected to a negative electrode side of the battery 100. A midpoint of each pair of upper and lower arms, i.e., a connection point, at which a side of the upper arm connected with the lower arm (emitter electrode side of the upper arm in the case of IGBT) and a side of the lower arm connected with the upper arm are joined, is extending to outside from an alternate current side of the power module 310 and electrically connected to a wiring of the armature 211 of a corresponding phase.

The electrolytic capacitor 320 is provided in order to suppress voltage fluctuation that is caused by high speed switching of the switching semiconductor devices and parasite inductance in the power conversion circuit. The electrolytic capacitor 320 functions as a smoothing capacitor that removes an alternate current component contained in a direct current component. The smoothing capacitor may be a film capacitor.

The motor controller 340 is an electronic circuit device that generates switch command signals (for example, PWM (pulse width modulation) signals) for six switching semiconductor devices corresponding to a torque command signal output from a vehicle controller 840 that controls the vehicle in whole and outputs the generated switch command signals to the drive circuit 330.

The drive circuit 330 is an electronic circuit device that generates drive signals for six semiconductor devices corresponding to a switch command signal output from the motor controller 340 and outputs the generated drive signals to gate electrodes of the six switching semiconductor devices.

In the inverter 300, in particular in the power module 310 and in the electrolytic capacitor 320 are, their temperatures are controlled by the heat cycling system described later so that the temperatures fall within an allowable temperature range. Since the power module 310 and the electrolytic capacitor 320 are heat generating components, so that it is necessary to cool them. In case when the ambient temperature is relatively low, it may be necessary to warm them in order to obtain specified functioning- and electrical properties.

The vehicle controller generates a motor torque command signal for the motor controller 340 based on a plurality of state parameters that indicates the vehicle operational state and outputs the generated motor torque command signal to the motor controller 340. Examples of the plurality of state parameters that indicates the vehicle operational state include a torque demand (depressing amount of the accelerator pedal or a throttle position),vehicle speed, and so on.

The battery 100 is a battery that generates a high voltage of 200 volts or higher as nominal output voltage, which constitutes a drive power source for the motor generator 200. The battery 100 is electrically connected with the inverter 300 and a charger 500 through a junction box 400. A lithium ion battery is used as the battery 100.

Other electrical storage devices such as a lead battery as the battery 100, a nickel hydride battery, an electrical double layer capacitor, a hybrid capacitor may be used as the battery 100.

The battery 100 is an electrical storage device that is charged and discharged by the inverter 300 and the charger 500. It includes the battery unit 110 and a control unit as major parts.

The battery 110 functions as a storage device of electrical energy and is constituted by a plurality of lithium ion battery cells that can store and discharge electrical energy (charging and discharging of direct current power) electrically connected in series. The battery unit 110 is electrically connected with the inverter 300 and the charger 500.

The control unit is an electronic control device constituted by a plurality of electronic circuit components. It manages and controls the state of the battery unit 110 and provides information about allowable charging/discharging amount to the inverter 300 and the charger 500 to control input and output of electrical energy in and from the battery unit 110.

The electronic control device is constituted by two hierarchical levels from the viewpoint of function. It includes the battery control unit 130 that corresponds to a higher level (parent) in the battery 100 and the cell control unit 120 that corresponds to a lower level (child) with respect to the battery control unit 130.

The cell control unit 120 operates as a subordinate to the batter control unit 130 based on a command signal output from the battery control unit 130. It includes a plurality of battery cell management means that manages and controls respective states of the plurality of the lithium ion battery cells. The plurality of battery cell management means is constituted by integrated circuits (ICs), respectively. In case where the battery unit 110 has a structure such that a plurality of lithium ion battery cells electrically connected in series is divided into a plurality of groups, the plurality of integrated circuits is provided corresponding to the plurality of groups, respectively. Each integrated circuit detects respective voltages and overcharge-overdischarge abnormalities of the plurality of lithium ion battery cells contained in the corresponding group.

The battery control unit 130 is an electronic control device that manages and controls the state of the battery unit 110 and notifies an allowable charge- and discharge amount to the vehicle controller 840 or the motor controller 340 to control input and output of electric energy in and from the battery unit 110; the battery control unit 130 is provided with a state detection means. The state detection means is a calculation processor such as a microcomputer or a digital signal processor.

A plurality of signals is input to the state detection means of the battery control unit 130. The plurality of signals includes a measurement signal output for a current measurement means for measuring charge-discharge current of the battery unit 110, a measurement signal output from a voltage measurement means for measuring charge-discharge voltage of the battery unit 110, a measurement signal output from a temperature measurement means for measuring temperatures of the battery unit 110 and of some of the lithium ion battery cells, respectively, a detection signal relating to terminal voltage of the plurality of lithium ion battery cells output from the cell control unit 120, an abnormality signal output from the cell control unit 120, an on-off signal based on an action of an ignition key switch, and a signal output from the vehicle controller 840 or the motor controller 340, which is a control device of a higher hierarchical level than the battery control unit 130.

The state detection means of the battery control unit 130 performs a plurality of calculations based on a plurality of informations. The plurality of informations includes information obtained from the above-mentioned input information, characteristics information of the lithium ion battery cell and calculation information necessary for calculations. The plurality of calculations includes calculations to obtain SOC (state of charge) and SOH (state of health) of the battery unit 110, calculations for balancing states of charge among the plurality of lithium ion battery cells, and calculations for controlling the charge- and discharge amount of the battery unit 110. The state detection means of the battery control unit 130, based on results of these calculations, generates and outputs a plurality of signals including a command signal to the cell control unit 120, a signal relating to allowable charge- and discharge amount for controlling the charge-discharge amount of the battery unit 110, a signal relating to SOC of the battery unit 110, and a signal relating to SOH of the battery unit 110.

The state detection means of the battery control unit 130 generates and outputs a plurality of signals including a command signal to open the first positive- and negative relays 410, 420, and a signal for notifying abnormal state based on the abnormality signal output from the cell control unit 120.

The battery control unit 130 and the cell control unit 120 are constructed so as to communicate signals therebetween through a signal transmission path but are electrically insulated from each other. This is because they have different operation power sources and different base potentials from each other. To this end, an insulator 140 such as a photocoupler, a capacitive coupling element, or a transformer is provided on the signal transmission path between the battery control unit 130 and the cell control unit 120. As a result, the battery control unit 130 and the cell control unit 120 can transmit signals having different base potentials to each other.

In the battery 100, in particular in the battery unit 110, its temperature is controlled so that the temperature falls within the allowable temperature range by the heat cycling system described later. The battery unit 110 is an heat-generating component, and therefore it needs to be cooled, and in case when the ambient temperature is relatively low, it may sometimes be necessary to be warmed up in order to obtain specified input- and output characteristics.

The electric energy stored in the battery 100 is used as a drive power of the electric-motor driving system that drives EV 1000. Accumulation of electric energy in the battery 100 is achieved by exploiting a regenerated power generated by a regeneration operation of the electric-motor driving system, a power taken from a commercial power source for domestic use, or a power purchased from a charging station.

In case the battery 100 is to be charged from a commercial power source 600 for domestic use, a power source plug 550 at the end of a power cable, which is electrically connected with an external power source connection terminal of the charger 500, is inserted into an electric outlet 700 on the commercial power source 600 side to electrically connect the charger 500 and the commercial power source 600 with each other. Alternatively, in case where the battery 100 is to be charged from a power feeder in the charging station, the power cable extending from the power feeder of the charging station is connected with an external power source connection terminal of the charger 500 to electrically connect the charger 500 and the power feeder of the charging station with each other. As a result, alternate current power is supplied from the commercial power source 600 or from the power feeder of the charging station to the charger 500. The charger 500 converts the supplied alternate current power into direct current power and adjusts the voltage to a charging voltage of the battery 100 before supplying the power to the battery 100. As a result, the battery 100 is charged.

Charging of the battery 100 from the power feeder of the charging station can be performed basically in the same manner as the charging of the battery 100 from the commercial power source 600 at home. However, the current amount supplied to the charger 500 and charging time are different for charging from the commercial power source 600 at home and for charging from the power feeder of the charging station. The charging with the power feeder of the charging station can charge a larger current amount in a shorter charging time than the charging with the commercial power source 600 at home. That is, the charging with the power feeder of the charging station enables rapid charging.

The charger 500 is a power conversion unit that converts the alternate current power supplied from the commercial power source 600 at home or the alternate current power supplied from the power feeder of the charging station into direct current power, and further boosts the converted direct current power to a charging voltage for supplying it to the battery 100. The charger 500 includes as main components an alternate current-direct current conversion circuit 510, a booster circuit 520, a driver circuit 530, and a charging control unit 540.

The alternate current-direct current conversion circuit 510 is a power conversion circuit that converts the alternate current power supplied from an external power source to direct current power and outputs the converted direct current power, and comprises a rectifier circuit and a power factor improvement circuit. The rectifier circuit is constituted by, for example, a plurality of diode devices in bridge connection structure and rectifies alternate current power supplied from an external power source into direct current power. The power factor improvement circuit is electrically connected to the direct current side of the rectifier circuit and improves the power factor of the rectifier circuit output. As the circuit that converts alternate current power into direct current power, a circuit may be constructed by bridge-connecting a plurality of switching semiconductor devices, to each of which is parallel connected with a diode element in reverse direction.

The booster circuit 520 is a power conversion circuit that boosts the direct current power output from the alternate current-direct current circuit 510 (power factor improvement circuit) up to the charging voltage of the battery 100 and is constituted by, for example, DC-DC converter of an insulated type. The DC-DC converter of an insulated type is constituted by a transformer, a conversion circuit, a rectifier circuit, a smoothing reactor, and a smoothing capacitor. The conversion circuit includes a plurality of switching semiconductor devices that are connected in bridge connection and are electrically connected to the primary wiring side of the transformer, converting the direct current power output from the alternate current-direct current conversion circuit 510 into alternate current power and inputs the converted alternate current power into the primary wiring side of the transformer. The rectifier circuit is constituted by a plurality of diode elements connected in bridge connection. It is electrically connected to the secondary wiring side of the transformer and rectifies the alternate current power generated at the secondary wiring side of the transformer into direct current power. The smoothing reactor is electrically connected in series to the positive electrode side on the output side (direct current side) of the rectifier circuit. The smoothing capacitor is electrically connected with between the positive and negative electrodes on the output side (direct current side) of the rectifier circuit.

The charging control unit 540 is an electronic circuit unit constructed by implementing a plurality of electronic components including an arithmetic processing unit such as a microcomputer packed on a circuit board. The charging control unit 540 starts and stops charging of the battery 100 by the charger 500 and controls power, voltage, current and so on supplied from the charger 500 to the battery 100 upon the charging. To perform such controls, the charging control unit 540 generates switch command signals (for example, PWM (pulse width-modulated modulation) signals) for a plurality of switching semiconductor devices of the boost circuit 520 in response to the signal output for the vehicle controller 840 and the signal output from the controller of the battery 100 and outputs the generated signals to the driver circuit 530.

The vehicle controller 840 monitors, for example, the voltage of the input side of the charger 500, and outputs a command signal to start up charging to the charging control unit 540 when it is determined that the charger 500 is in a condition to start up charging wherein the charger 500 is electrically connected with the external power source so that voltage is applied to the input side of the charger 500. On the other hand, when it is determined that the battery 100 is in a full charged state based on the battery state signal output from the controller of the battery 100, the vehicle controller 840 outputs a command signal to stop the charging to the charging control unit 540. Such an operation may be performed by the motor controller 340, by the controller of the battery 100 or by the charging control unit 540 itself in cooperation with the controller of the battery 100.

The controller of the battery 100 detects the state of the battery 100 and calculates an allowable charge amount of the battery 100 and outputs a signal relating to the result of the calculation to the charger 500 in order to control the charging of the battery 100 by the charger 500.

The driver circuit 530 is an electronic circuit unit that is constructed by implementing a plurality of electronic components such as switching semiconductor devices or amplifiers on a circuit board. The driver circuit 530 generates drive signals for a plurality of switching semiconductor devices of the booster circuit 520 in response to the command signal output from the charging control unit 540, and outputs the generated drive signals to the gate electrodes of the plurality of the switching semiconductor devices.

In a case that the alternate current-direct current conversion circuit 510 is constructed by switching semiconductor devices, a switch command signal for a switching semiconductor device of the alternate current-direct current conversion circuit 510 is output to the driver circuit 530. The driver circuit 530 outputs a drive signal for the switching semiconductor device of the alternate current-direct current conversion circuit 510 to the gate electrode thereof to control switching of the switching semiconductor device of the alternate current-direct current conversion circuit 510.

The first and second positive electrode side relays 410, 430 and the first and second negative electrode side relays 420, 440 are accommodated inside the junction box 410.

The first positive electrode side relay 410 is a switch to control electrical connection between the direct current positive electrode side of the inverter 300 (power module 310) and the positive electrode side of the battery 100. The first negative electrode side relay 420 is a switch to control electrical connection between the direct current negative electrode side of the inverter 300 (power module 310) and the negative electrode side of the battery 100. The second positive electrode side relay 430 is a switch to control electrical connection between the direct current positive electrode side of the charger 500 (booster circuit 520) and the positive electrode side of the battery 100. The second negative side relay 440 is a switch to control electrical connection between the direct current negative electrode side of the charger 500 (booster circuit 500) and the negative electrode side of the battery 100.

The first positive electrode side relay 410 and the first negative electrode side relay 420 are closed when the system is in an operation mode where the rotative power of the motor generator 200 is required and in an operation mode where electric power generation is required. They are opened when abnormality occurs in the electric-motor driving system or in the vehicle and when the battery 100 is charged by the charger 500. On the other hand, the second positive electrode side relay 430 and the second negative electrode side relay 440 are closed when the battery 100 is charged by the charger 500. They are opened when the charging of the battery 100 is completed and when abnormality occurs in the charger 500 or in the battery 100.

Open/close of the first positive electrode side relay 410 and the first negative electrode side relay 420 is controlled by an open/close command signal output from the vehicle controller 840. The open/close of the first positive electrode side relay 410 and the first negative electrode side relay 420 may be controlled by an open/close command signal output from other controller, for example, the motor controller 340 or the controller of the battery 100. The open/close of the second positive electrode relay 430 and the second negative electrode side relay 440 is controlled by an open/close command signal output from the charging control unit 540. The open/close of the second positive electrode side relay 430 and the second negative electrode side relay 440 may be controlled by an open/close command signal output from other control unit, for example, the vehicle control unit 840 or the control unit of the battery 100.

As mentioned above, in EV 1000, the first positive electrode side relay 410, the first negative electrode side relay 420, the second positive electrode side relay 430, and the second negative electrode side relay 440 are provided between the battery 100 and the inverter 300 and between the battery 100 and the charger 500. As a result, high safety of the electric-motor driving system that is at a high voltage can be secured.

Now, a heat cycling system installed in EV 1000 is explained. EV 1000 includes, as heat cycling systems, an air-conditioning system that controls the condition of air in the vehicle interior and a temperature control system that controls the temperature of an heat-generating body such as the battery 100, the motor generator 200, and the inverter 300.

An energy source is required for operating the air-conditioning system and the temperature control system. To this end, EV 1000 uses the battery 100 in the motor generator 200 as such an energy source. Note that the air-conditioning system and the temperature adjustment system consume more electrical energy from the battery 100 than other electrical loads do.

EV 1000 attracts high attention to the fact that it gives less (more particularly null) influence on the global environment than hybrid vehicles (hereafter, referred to as "HEV").

However, EV 1000 is less accepted in the market than HEV, since EV 1000 shows a low mileage per one charging of the battery 100, and moreover since promoting of infrastructure such as charging stations is still on the way. Further, EV 1000 consumes much more electrical energy for a desired travel distance than is required by a HEV, so that the battery 100 should have a larger capacity than that of a HEV. As a result, the cost of the battery 100 is higher for EV 1000 than for HEV, resulting in a higher cost of the vehicle than HEV. Therefore, EV 1000 is less accepted in the market than HEV.

In order for EV 1000 to be more accepted in the market, it is necessary to increase the mileage per one charging of the battery 100 of EV. To increase the mileage per one charging of the battery 100 of EV, it is necessary to suppress consumption of electrical energy stored in the battery 100 other than driving of the motor generator 200.

The heat-generating bodies such as the battery 100, the temperatures of motor generator 200 and inverter 300 are controlled so that these temperatures fall within allowable temperature ranges. The heat-generating bodies abruptly change their outputs corresponding to variation in load of EV 1000, and accordingly the the amount of generated heat is varied. To operate an heat-generating body at high efficiency, it is desirable to vary the performance of the temperature control system according to variation of heat generation (temperature) of the heat-generating body so that the temperature of the heat-generating body will be maintained always at an optimum temperature.

On the other hand, in order for EV 1000 to be more accepted in the market, it is necessary to reduce cost of heat-generating bodies such as battery 100, motor generator 200, and inverter 300 to lower the price of the vehicle comparable to that of a HEV. To reduce the cost of the heat-generating body, it is necessary to reduce the size of and increase the output of the heat-generating body. However, if the heat-generating body has a reduced size and an increased output, the amount of heat generation (temperature) increases, so that it is necessary to increase the performance of the temperature control system for the heat-generating body.

In the embodiment described below, within a heat cycling system of EV 1000, a temperature control system and an air-conditioning system are integrally constructed, in order for heat energy to be efficiently used for interior air-conditioning and for temperature control of the heat-generating body.

Specifically, the heat cycling is divided into a primary heat cycling that exchanges heat with exterior and a secondary heat cycling that exchanges heat with interior and the heat-generating body. The primary heat cycling is constituted by a refrigeration cycle system and the secondary heat cycle circuit is constituted by two heat transfer systems, each of which has an independently circulating heat medium. In order to allow the refrigerant of the refrigeration cycle system and each heat medium of the two heat transfer systems can exchange heat therebetween, an intermediate heat exchanger is provided between the refrigeration cycle system and each of the two heat transfer systems. Further, in order that the heat medium of the heat transfer system that exchanges heat with the heat-generating body and air taken into the vehicle interior can exchange heat therebetween, an interior heat exchanger is provided in the heat transfer system that exchanges heat with the heat-generating body.

According to the embodiment described below, the heat energy obtained through temperature control of the heat-generating body can be utilized for interior air-conditioning to minimize energy required for the interior air-conditioning, so that it is possible to save energy for interior air-conditioning. In addition, according to the embodiment described below, the heat energy obtained through temperature control of the heat-generating body can be utilized for the interior air-conditioning, so that the energy saving effect of the interior air-conditioning can be enhanced. Therefore, according to the embodiment described below, the air-conditioning system can reduce energy that the air-conditioning system takes out of the energy source of the heat-generating body.

The air-conditioning system for a vehicle as mentioned above is suitable for increasing the travel distance of EV 1000 per one charging of the battery 100. The air-conditioning system for a vehicle as mentioned above is suitable for reducing the capacity of the battery 100 when the travel distance per one charging of the battery 100 is equivalent to that of the conventional one. If the capacity of the battery 100 is reduced, it may lead to a reduction in cost of EV 1000, helping promotion of EV 1000 in the market, and a reduction in weight of EV 1000.

According to the embodiment described below, the heat energy used for interior air-conditioning can be utilized for temperature control of the heat-generating body to control the temperature of the heat medium for temperature control of the heat-generating body in a wide range, so that the temperature of the heat-generating body can be changed without being adversely affected by the surrounding environment. Therefore, according to the embodiment described below, the temperature of the heat-generating body can be controlled to be an optimum temperature at which the heat-generating body operates with high efficiencies, so that it is possible to operate the heat-generating body at high efficiencies.

The air-conditioning system for a vehicle as mentioned above is suitable for reducing the cost of EV 1000. If EV 1000 is made to be low-cost, it may facilitate EV 1000 to be more widely used.

### (Overall construction of air-conditioning system for a vehicle)

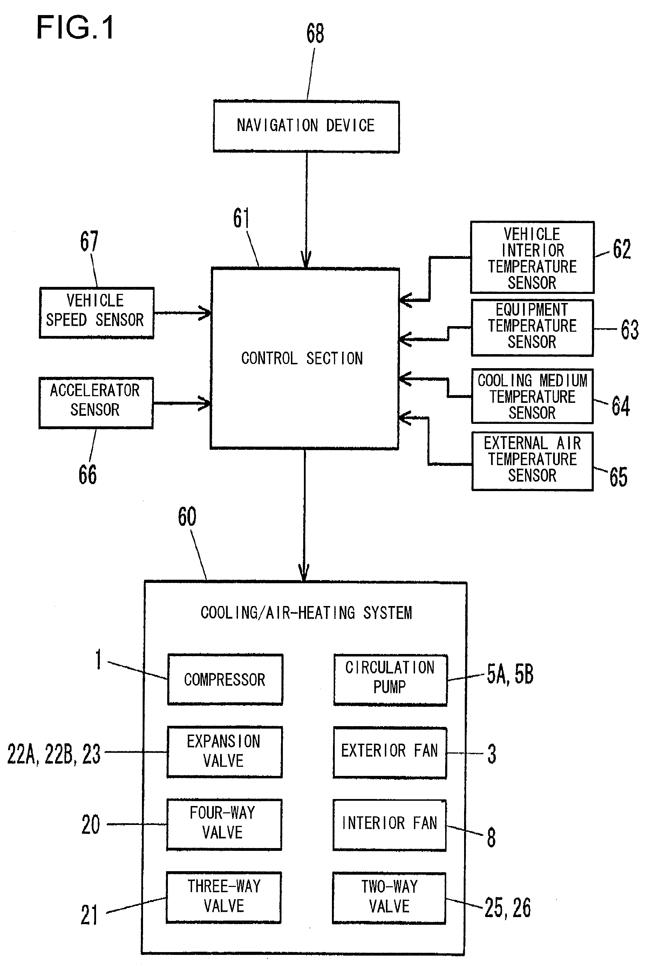

FIG. 1 is a diagram schematically showing a construction of the air-conditioning system for a vehicle according to the present invention. The air-conditioning system for a vehicle shown in FIG. 1 comprises a cooling/air-heating system 60 that performs cooling/air-heating of the vehicle interior and equipment that needs temperature control and a control device 61 that controls the cooling/air-heating system 60. Various types of actuators provided in the cooling/air-heating system 60 are controlled by control signals from the control device 61. Examples of the actuators associated with the present embodiment include the compressor 1, expansion valves 22A, 22B, 23, four-way valve 20, three-way valve 21, circulation pumps 5A, 5B, exterior fan 3 and interior fan 8.

Informations on temperatures from a vehicle temperature sensor 62, an equipment temperature sensor 63, a refrigerant temperature sensor 64, and an external air temperature sensor 65 respectively are input to the control device 61, where the sensors detect respective temperatures of temperature control objects. According to the present embodiment, as the temperature control objects, it is includeded: air in the vehicle interior and equipment such as the motor, the inverter, the battery and the gearbox, each of which is provided with a temperature sensor. To the control device 61 is input vehicle speed information that indicates a driving state of the vehicle from a vehicle speed sensor 66 and an accelerator pedal depressing amount information from an accelerator pedal sensor 67. Also, travel plan information of the vehicle (road information, destination information and so on) is input to the control device 61 from a navigation device 68.

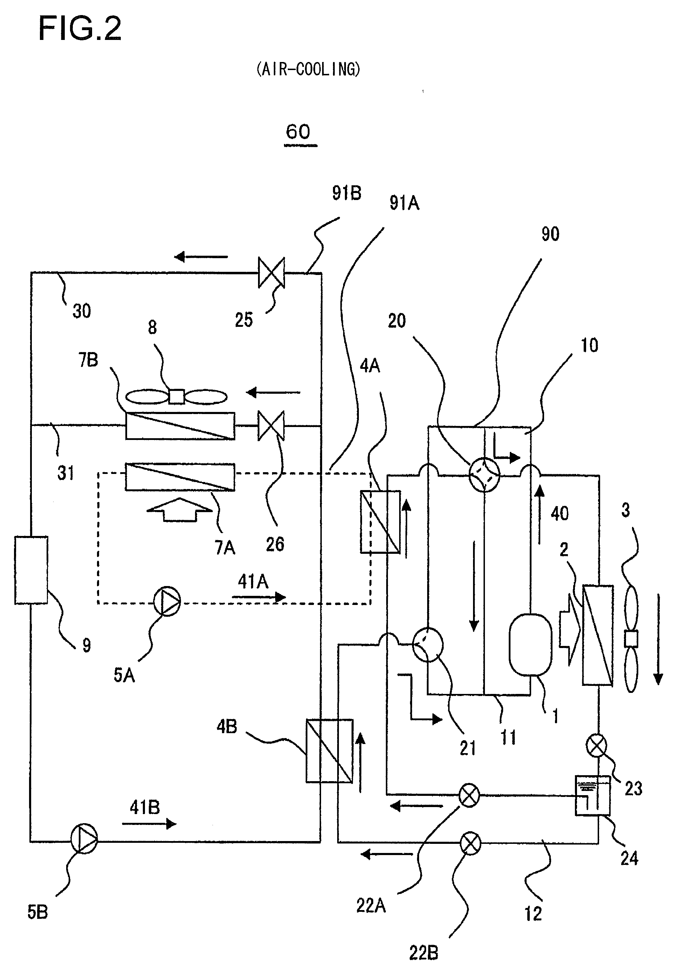

(Cooling/air-heating system 60) FIG. 2 is a diagram showing a schematic construction of the cooling/air-heating system 60. The cooling/air-heating system 60 includes a refrigeration cycle circuit 90 and an air-conditioning circuit 91A as an air-conditioning system that controls the condition of air in the vehicle interior and an equipment cooling circuit 91B as a temperature control system that controls a temperature of a heat-generating body such as battery 100, motor generator 200, and inverter 300 shown in FIG. 19.

In the refrigeration cycle circuit 90 are circularly connected compressor 1 that compresses the refrigerant 40, exterior heat exchanger 2 that exchanges heat with external air, fluid piping 12, and air-conditioning heat exchanger 4A. The air-conditioning heat exchanger 4A exchanges heat with the air-conditioning cooling medium 41A kept in the air-conditioning circuit 91A. Between the intake piping 11 and the discharge piping 10 of the compressor 1 is provided the four-way valve 20. By switching the four-way valve 20, either one of the intake piping 11 and the discharge piping 10 can be connected with the exterior heat exchanger 2 and the other one can be connected with the air-conditioning heat exchanger 4A. FIG. 1 illustrates air-cooling operation; the four-way valve 20 connects the discharge piping 10 with the exterior heat exchanger 2 and the intake piping 11 with the air-conditioning heat exchanger 4A.

The cooling heat exchanger 4B exchanges heat between the refrigerant 40 of the refrigeration cycle circuit 90 and the equipment cooling medium 41B. One end of the cooling heat exchanger 4B is connected with the fluid piping 12 and the other end thereof is switchably connected with either one of the discharge piping 10 or the intake piping 11 of the compressor 1 through the three-way valve 21. The fluid piping 12 is provided with the receiver 24. The expansion valves 23, 22A, 22B that function as flow rate measurement means are provided between the receiver 24 on the fluid piping 12 and the exterior heat exchanger 2, between the air-conditioning heat exchanger 4A and the receiver 24, and between the cooling heat exchanger 4B and the receiver 24, respectively. The exterior heat exchanger 2 is provided with the exterior fan 3 for blowing external air.

In the air-conditioning circuit 91A are circularly connected interior heat exchanger 7A, circulation pump 5A, and air-conditioning heat exchanger 4A in order. The interior heat exchanger 7A exchanges heat with air that will be blown into the vehicle interior. The circulation pump 5A circulates the air-conditioning cooling medium 41A.

In the equipment cooling circuit 91B are circularly connected interior heat exchanger 7B, temperature controlling object equipment 9, circulation pump 5B, and cooling heat exchanger 4B in order. The interior heat exchanger 7B exchanges heat with air that has flown out from the interior heat exchanger 7A. The circulation pump 5B circulates the equipment cooling medium 41B (for example, cooling water being used). According to the present embodiment, examples of the temperature controlling object equipment 9 include the motor, the inverter, the driving battery, and gearbox.

The equipment cooling circuit 91B is provided with a bypass circuit 30 that bypasses at both ends of the interior heat exchanger 7B. The bypass circuit 30 is provided with a two-way valve 25, and a main circuit 31 that passes through the interior heat exchanger 7B is provided with the two-way valve 26. By opening and closing actions of these two-way valves 25, 26, it is possible to freely construct a flow channel of the equipment cooling medium 41B.

Then, the operational action of the cooling/air-heating system 60 shown in FIG. 2 is explained. According to the present embodiment, the circulation pump 5B is operated to perform temperature control of the temperature controlling object equipment 9. The operations of other equipments vary according to a load of air-conditioning and the heat generation amount of the temperature controlling object equipment 9. Hereafter, explanation is made about air-cooling operation, dehumidifying (air-cooling/air-heating) operation, air-heating operation, air-heating/cooling operation, and heating operation.

### (Air-cooling operation)

Air-cooling operation means an operation mode in which both the air-conditioning circuit 91A and the equipment cooling circuit 91B can be cooled by using the exterior heat exchanger 2 as a condenser, and the air-conditioning heat exchanger 4A and the cooling heat exchanger 4B as evaporators. In case of the air-cooling operation, the four-way valve 20 and the three-way valve 21 provided in the refrigeration cycle circuit 90 are switched to a state shown by solid lines. That is, the discharge piping 10 of the compressor 1 is connected with the exterior heat exchanger 2 and the intake piping 11 of the compressor 1 is connected with the air-conditioning heat exchanger 4A and the cooling heat exchanger 4B.

The refrigerant 40 compressed by the compressor 1 radiates heat at the exterior heat exchanger 2 to be liquefied and then divided in the receiver 24 into a portion of the refrigerant that flows into the air-conditioning heat exchanger 4A and a portion of the refrigerant that flows into the cooling heat exchanger. The portion of the refrigerant that flowed into the air-conditioning heat exchanger is decompressed by the expansion valve 22A to have a lower temperature and a lower pressure and then absorbs heat from the air-conditioning cooling medium 41A of the air-conditioning circuit 91A at the air-conditioning heat exchanger 4A to be evaporated, returning to the compressor 1 through the four-way valve 20. On the other hand, the portion of the refrigerant that flowed into the cooling heat exchanger 4B is decompressed by the expansion valve 22B to have a lower temperature and a lower pressure and then absorbs heat from the equipment cooling medium 41B of the equipment cooling circuit 91B at the cooling heat exchanger 4B to be evaporated, returning to the compressor 1 through the three-way valve 21.

By driving the circulation pump 5A provided in the air-conditioning circuit 91A, the air-conditioning cooling medium 41A cooled at the air-conditioning heat exchanger 4A is supplied to the interior heat exchanger 7A. When the interior fan 8 is driven, the air that has exchanged heat at the interior heat exchanger 7A and has been cooled is blown into the vehicle interior. When the circulation pump 5B provided in the equipment cooling circuit 91B is driven, the equipment cooling medium 41B heated by the temperature controlling object equipment 9 is cooled by heat exchange at the cooling heat exchanger 4B.

Since both the air-conditioning heat exchanger 4A and the cooling heat exchanger 4B can be used as evaporators as mentioned above, air-cooling of the vehicle interior and cooling of the temperature controlling object equipment 9 can be realized simultaneously. Furthermore, since the air-conditioning heat exchanger 4A and the cooling heat exchanger 4B are connected with the intake piping 11 of the compressor 1 in parallel and the expansion valves 22A, 22B are provided in the respective refrigerant circuits, the respective flow rates of the portions of the refrigerant that flow in the air-conditioning heat exchanger 4A and the cooling heat exchanger 4B can be changed freely. As a result, the temperature of the equipment cooling medium 41B and the temperature of the air-conditioning cooling medium 41A can be controlled at any desired temperatures. Therefore, even when the temperature of the air-conditioning cooling medium 41A is sufficiently lowered in order to perform air-cooling, the temperature of the equipment cooling medium 41B with which the temperature controlling object equipment 9 is connected can be maintained high by controlling the flow rate of the portion of the refrigerant that flows into the cooling heat exchanger 4B.

The temperature of the equipment cooling medium 41B can be controlled by controlling the opening of the expansion valve 22B. In a simplified manner, the valve is relatively more opened when the temperature of the equipment cooling medium 41B is high and the valve is relatively more closed when the temperature is low.

The performance of the refrigeration cycle circuit 90 can be controlled by regulating the rotational speed of the compressor 1 such that the temperature of the air-conditioning cooling medium 41A reaches a desired temperature. When it is determined that the load of air-cooling is high, the target temperature of the air-conditioning cooling medium 41A is lowered whereas when it is determined that the load of air-cooling is low, the target temperature of the air-conditioning cooling medium 41A is elevated. By so doing, control of the air-conditioning performance in response to the load can be achieved.

When no load of air-cooling is imposed and only cooling of the temperature controlling object equipment is required, it is necessary to use only the cooling heat exchanger 4B as an evaporator by stopping the circulation pump 5A and the interior fan 8 and closing the expansion valve 22A and adjusting the opening of the expansion valve 22B. This makes it possible to cool the equipment cooling medium 41B, so that the temperature controlling object equipment 9 can be cooled. In this case, the rotational speed of the compressor 1 is controlled so that the temperature of the equipment cooling medium 41B reaches the target temperature. The amount of heat exchange may be changed by controlling the rotational speed of the circulation pump 5A.

(Air-cooling/dehumidifying operation) In an air-cooling/dehumidifying operation, the two-way valve 26 is opened in the state shown in FIG. 2 to allow the equipment cooling medium 41B at a high temperature to flow into the main circuit 31 that is provided with the interior heat exchanger 7B. When the equipment cooling medium 41B at a high temperature is introduced in the interior heat exchanger 7B as mentioned above, it is possible to perform a so-called reheating and dehumidifying operation in which the air that is cooled and dehumidified at the interior heat exchanger 7A, after being heated at the interior heat exchanger 7B, is blown into the vehicle interior. Since the air supplied to the vehicle interior has a lower relative humidity, comfortableness of the interior space can be improved.

The heat source of the interior heat exchanger 7B used as a reheater is a so-called waste heat that is generated by the temperature controlling object equipment 9. Therefore, unlike the case where a heater or the like is used for reheating, it is unnecessary to additionally introduce energy, so that the comfortableness of the vehicle interior can be improved without increasing power consumption.

The amount of reheat may vary depending on the temperature and flow rate of the portion of the equipment cooling medium 41B that flows into the main circuit 31. Accordingly, the amount of reheat can be controlled by varying the amount of exchanged heat at the cooling heat exchanger and the flow rate of the portion of the equipment cooling medium 41B that flows into the main circuit 31. In order to make variable the amount of exchanged heat of the cooling heat exchanger 4B, the opening of the expansion valve 22B may be controlled to control the flow rate of the portion of the refrigerant that flows into the cooling heat exchanger 4B. When no cooling is necessary, the expansion valve 22B may be fully closed.

In order to make variable the flow rate of the portion of the equipment cooling medium 41B that flows into the main circuit 31, combination of the switching conditions of the two-way valves 25, 26may be changed. The ratios of flow rates of the portions of the equipment cooling medium 41B that flows into the main circuit 31 and the bypass circuit 30 can be controlled freely by using, for example, three-way valve instead of the two-way valves 25, 26.

### (Air-heating/dehumidifying operation)

FIG. 3 is a diagram illustrating an air-heating/dehumidifying operation. In case when the amount of reheat is insufficient in the air-cooling/dehumidifying operation, the three-way valve 21 is switched as shown in FIG. 3 to perform an
air-heating/dehumidifying operation. In the air-heating/dehumidifying operation, the equipment cooling medium 41B is heated by using the cooling heat exchanger 4B while keeping the air-conditioning heat exchanger 4A for use as an evaporator. In this case, the refrigerant compressed by the compressor 1 is divided by the four-way valve 20 and the three-way valve 21, flowing into the exterior heat exchanger 2 and the cooling heat exchanger 4B. The respective portions of the equipment cooling medium 41B are condensed and liquefied at the exterior heat exchanger 2 and the cooling heat exchanger 4B, respectively, and then converge in the receiver 24. Thereafter, the refrigerant decompressed by the expansion valve 22A returns to the compressor 1 after it is evaporated and gasified at the air-conditioning heat exchanger 4A.

Since the equipment cooling medium 41B can be heated by using the cooling heat exchanger 4B as mentioned above, the amount of reheat can be increased by using the refrigeration cycle circuit 90 even when the amount of reheat is insufficient. Also the heat input from the cooling heat exchanger 4B is a portion of the heat that has been discharged to the exterior air, so that no new heat source is required. Therefore, there is no increase in power consumption.

The refrigerant discharged from the compressor 1 is condensed by using both the cooling heat exchanger 4B and the exterior heat exchanger 2, so that the amount of reheat can be changed freely by controlling the flow rates of the portions of the refrigerant that flow into both the heat exchangers. Specifically, the amount of discharged heat is controlled by varying the rotational speed of the exterior fan 3 to control the flow rate of the refrigerant that flows through the exterior heat exchanger 2. Also, the flow rate of the refrigerant can be controlled by decreasing the opening of the expansion valve 23. As a result, the amount of exchanged heat at the cooling heat exchanger 4B can be increased to increase the amount of reheat.

Under the condition that the performance of exchanging heat of the exterior heat exchanger 2 becomes high, such as in the case where the temperature of the exterior air is low or the air-stream caused by driving hits the exterior heat exchanger 2, the amount of heat discharged from the exterior heat exchanger 2 tends to increase. For this reason, the amount of reheat can be increased by reducing the rotational speed of the exterior fan 3 or decreasing the opening of the expansion valve 23 based on the information from the sensors such as the temperature of the external air and vehicle speed.

As mentioned above, the amount of dehumidifying and the amount of reheat can be controlled in the cooling system according to the present embodiment. In concrete terms, a desired dehumidifying amount is ensured by setting the temperature of the cooling medium 41A for air conditioning to be a temperature enabling the dehumidifying operation. On the other side, a reheat amount is ensured by maintaining the temperature of the equipment cooling medium 41B in an appropriate temperature, which is achieved by controlling the flow rate of coolant flowing in the heat exchanger 4B for cooling through control of rotational speed of the interior fan 3 and opening of the expansion valves 23, 22B.

### (Air-heating operation)

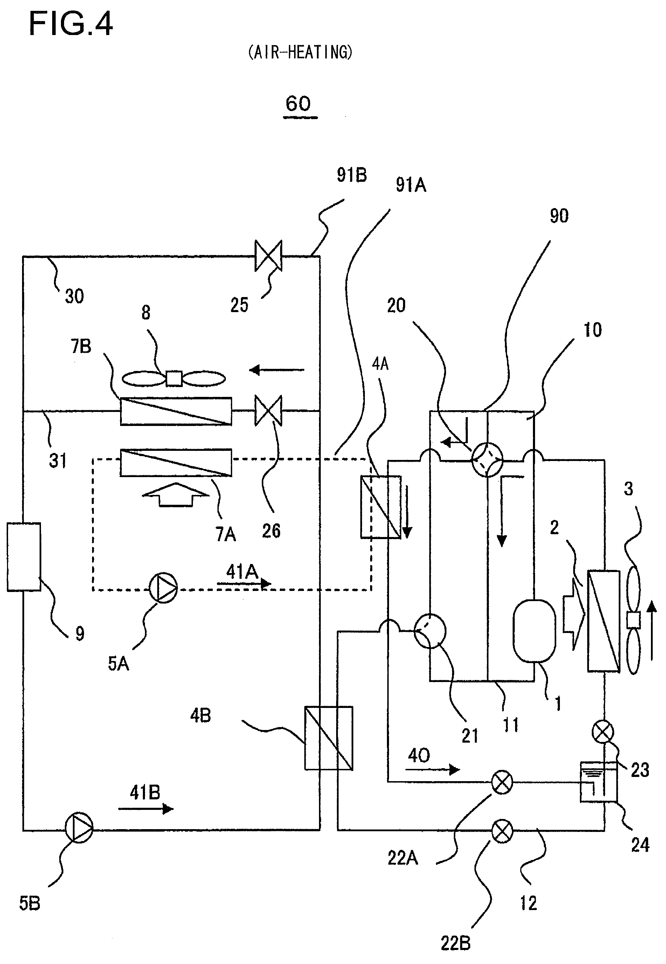

FIG. 4 is a diagram illustrating the system in an air-heating operation. For the air-heating operation, there are two operation modes depending on load of air-heating.

A first operation mode is a heat-radiating operation mode when the load of air-heating is low and uses the heat released from the temperature controlling object equipment 9 without using the refrigeration cycle circuit for air-heating. In the heat-radiating operation mode, the circulation pump 5B and the interior fan 8 are started up and the two-way valve 26 is opened to introduce the equipment cooling medium 41B into the interior heat exchanger 7B. Since the equipment cooling medium 41B has been already heated by the temperature controlling object equipment 9, the equipment cooling medium 41B is cooled when it radiates heat to the air to be blown into the vehicle interior at the interior heat exchanger 7B and the air blown into the vehicle interior is heated. By using the heat released from the temperature controlling object equipment 9 for air-heating, air-conditioning can be performed with reduced energy consumption.

A second operation mode is an operation mode when the heat released from the temperature controlling object equipment 9 is insufficient for the load of air-heating, i.e., an air-heating/heat-radiating operation mode in which the refrigeration cycle circuit 90 is used in combination with the heat released from the temperature controlling object equipment 9. In this case, the four-way valve 20 provided in the refrigeration cycle circuit 90 is switched as indicated by a solid line connecting the discharge piping 10 of the compressor 1 with the air-conditioning heat exchanger 4A and the intake piping 11 with the exterior heat exchanger 2. That is, there is formed a cycling in which the air-heating heat exchanger 41A works as a condenser and the exterior heat exchanger 2 as an evaporator.

The refrigerant 40 compressed by the compressor 1 is condensed and liquefied by radiating heat to the air-conditioning cooling medium 41A at the air-conditioning heat exchanger 4A. Thereafter, the liquefied refrigerant 40 is evaporated and gasified by heat exchange with the exterior air at the exterior heat exchanger 2 and returns to the compressor 1. The expansion valve 22B is full open and the cooling heat exchanger 4B is not used.

By starting up the circulation pump 5A, the air-conditioning cooling medium 41A warmed with the heat of condensation from the refrigerant 40 at the air-conditioning heat exchanger 4A flows into the interior heat exchanger 7A, where the warmed refrigerant 40 releases heat to the air to be blown into the vehicle interior. The air heated at the interior heat exchanger 7A is blown into the vehicle interior space after it is further warmed up with the heat gained from the equipment cooling medium 41B heated by the temperature controlling object equipment 9 at the interior heat exchanger 7B arranged on the downstream side of the flow of air.

As mentioned above, the system is constructed such that the air to be blown into the vehicle interior is further heated with the heat released from the temperature controlling object equipment 9 after it is heated by the refrigeration cycle circuit 90. As a result, the temperature of the air blown from the interior heat exchanger 7A is kept low as compared with the temperature of the air to be blown into the vehicle interior from the interior heat exchanger 7B. That is, an air-conditioning apparatus that consumes less energy can be constructed by utilizing heat released from the temperature controlling object equipment 9 for air-heating.

By controlling the air-heating performance of the refrigeration cycle circuit 90, the temperature of the equipment cooling medium 41B can be controlled depending on the amount of heat generated by the temperature controlling object equipment 9. When the amount of heat generated by the temperature controlling object equipment 9 increases, the temperature of the equipment cooling medium 41B increases, and therefore the air-heating performance of the refrigeration cycle circuit 90 is decreased. Due to this, the amount of heat released from the interior heat exchanger is decreased, and therefore the temperature of the air that flows into the interior heat exchanger 7B becomes lower, so that the amount of heat released from the equipment cooling medium 41B increases, resulting in suppression of temperature elevation of the equipment cooling medium 41B. Conversely, when the amount of heat generated by the temperature controlling object equipment 9 is decreased, the temperature of the equipment cooling medium 41B is lowered. Accordingly, the lowering of temperature of the equipment cooling medium 41B can be suppressed by increasing the air-heating performance of the refrigeration cycle circuit 90 to increase the temperature of the air that flows into the interior heat exchanger 7B.

As a concrete example of controlling the performance of the refrigeration cycle circuit 90, varying the rotational speed of the compressor 1 may be referred. It is effective to control the temperature of the equipment cooling medium 41B within a predetermined temperature range for avoiding a trouble, for example, that the temperature of the temperature controlling object equipment 9 deviates from its operational temperature range.

### (Air-heating/cooling operation)

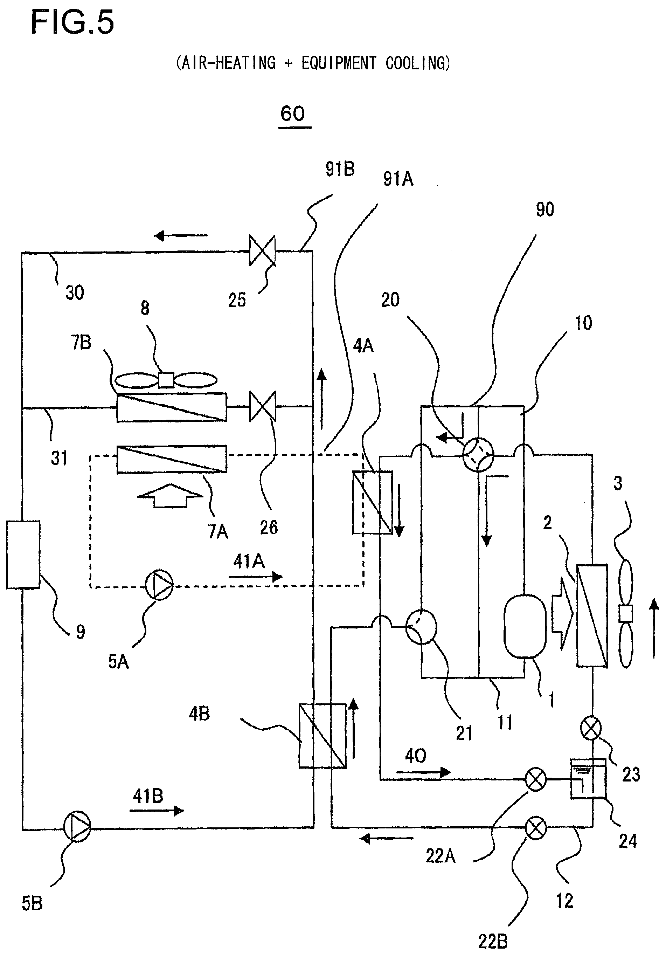

FIG. 5 is a diagram illustrating an air-heating/cooling operation. As mentioned above, when the load of air-heating is high, the target temperature of the equipment cooling medium 41B may be set higher. However, when it is difficult to elevate the target temperature of the equipment cooling medium 41B due to, for example, the specification of the temperature controlling object equipment 9, the air-heating performance cannot be increased. In such a case, the air-heating/cooling operation as explained below is performed to implement both the cooling of the equipment cooling medium 41B and the heating of the air-conditioning cooling medium 41A simultaneously.

In the case of air-heating/cooling operation, like the combined air-heating/heat radiating operation, there is formed a cycling in which the air-conditioning heat exchanger 4A is used as a condenser and the exterior heat exchanger 2 is used as an evaporator, and additionally the expansion valve 22B is opened to use the cooling heat exchanger 4B as an evaporator. The refrigerant that is condensed and liquefied at the air-conditioning heat exchanger 4A is divided into two portions in the receiver 24, one of which is returned to the compressor 1 after it is decompressed through the expansion valve 23 and evaporated at the exterior heat exchanger 2. The other portion of the refrigerant is decompressed through the expansion valve 22B and cools the equipment cooling medium 41B at the cooling heat exchanger 4B to be evaporated and gasified, and then returned to the compressor 1 through the three-way valve 21.

In the air-heating/cooling operation, the heat released from the temperature controlling object equipment 9 is recovered at the cooling heat exchanger 4B as a heat source for the refrigeration cycle circuit 90, transferred in the air-conditioning circuit at the air-conditioning heat exchanger 4A and released to the vehicle interior from the interior heat exchanger 7A. As explained, it is possible to recover the heat released by the temperature controlling object equipment 9 and to use the recovered heat for air-heating, while controlling the temperature of the temperature controlling object equipment 9. Since it is possible to absorb heat from external air by using the exterior heat exchanger 2, the air-heating performance can be increased.

Since the expansion valve 23 is provided between the fluid piping 12 and the exterior heat exchanger 2, it becomes possible to individually control the amount of heat absorbed from the equipment cooling medium 41B and the amount of heat absorbed from the external air by controlling the openings of the expansion valves 22B and 23, respectively. It should be noted that when the temperature of the equipment cooling medium 41B becomes lower than the temperature of the air-conditioning cooling medium 41A, the air heated at the interior heat exchanger 7A would be cooled at the interior heat exchanger 7B. In such a case, the two-way valve 26 is closed while the two-way valve 25 is opened in the equipment cooling circuit 91B to allow use of the bypass circuit 30. This prevents the air to be blown into the vehicle interior from being cooled by the cooling medium cooled at the cooling heating exchanger 4B.

In case when the load of air-heating is lowered and the air-heating/cooling operation is changed to a combined air-heating/heat-radiating operation, there is the possibility that there occurs a trouble, for example, that the blowing temperature becomes low if the temperature of the equipment cooling medium 41B is low. Therefore, it is desirable to increase the temperature of the equipment cooling medium 41B before the operation mode change. This can be achieved by controlling the opening of the expansion valve 22B, since the temperature of the equipment cooling medium 41B can be controlled by making variable the amount of heat exchange of the cooling heat exchanger 4B. In case when it is detected that the temperature of the air-conditioning cooling medium 41A becomes lower than the temperature of the equipment cooling medium 41B, while keeping the temperature of the equipment cooling medium during the air-heating/cooling operation, then it may be judged that the load of air-heating is decreased, which may allow to change the operation mode of the system from the air-heating/cooling operation to the combined air-heating/heat radiating operation mode.

### (Heating operation)

Upon starting up of the system when the external air temperature is low as in winter seasons, the temperature of the equipment cooling medium 41B is low so that it cannot be used for air-heating immediately after its starting up, and therefore it is necessary to wait for a while until the temperature of the equipment cooling medium 41B increases with the heat released from the temperature controlling object equipment 9. In such a case, the expansion valve 22B is closed in the cycling shown in FIG. 5 to perform an air-heating operation by using the interior heat exchanger 7A. Also, a cycling is constructed in which the heat exchange does not occur at the interior heat exchanger 7B between the equipment cooling medium 41B of low temperature and the blown air into the vehicle interior, for which two-way valve 26 is closed and the two-way valve 25 is opened.

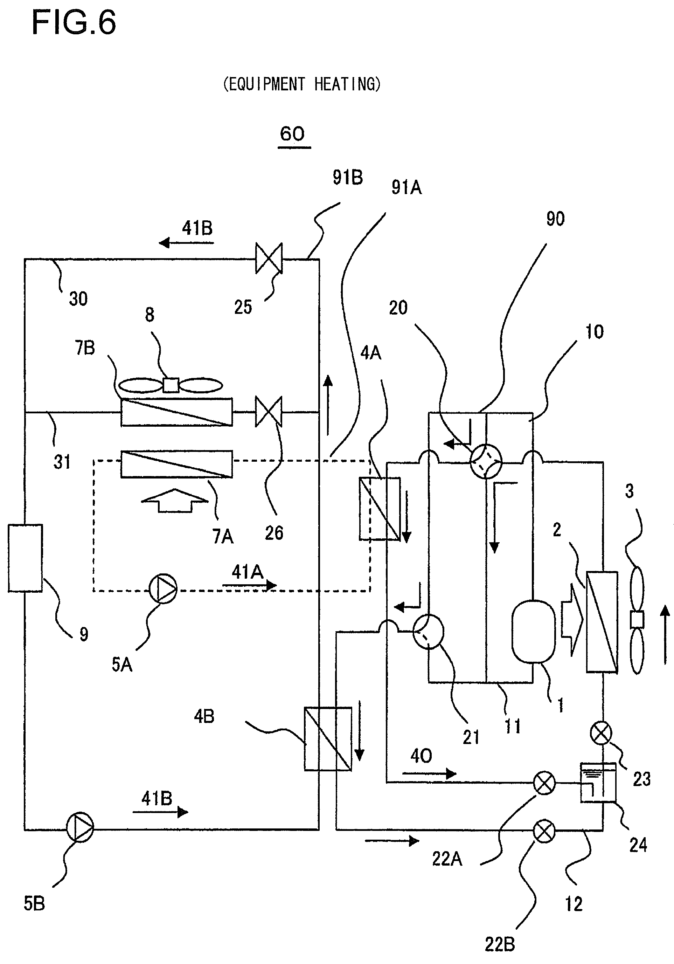

In case it is desired to rapidly increase the temperature of the equipment cooling medium 41B when the amount of heat generated by the temperature controlling object equipment 9 is small, the three-way valve 21 is switched as shown in FIG. 6. With this construction, the refrigerant 40 discharged from the compressor 1 flows into both the air-conditioning heat exchanger 4A and the cooling heat exchanger 4B, so that the equipment cooling medium 41B can be heated by using condensation heat of the portion of the refrigerant 40 that has flown into the cooling heat exchanger 4B. In this cycling, the expansion valves 22A, 22B are fully opened and the refrigerant is decompressed by controlling the opening of the expansion valve 23 and the heat from the external air is absorbed at the interior heat exchanger 2. The two-way valve 26 is closed and the two-way valve 25 is opened to use the bypass circuit.

Since it is possible to heat the equipment cooling medium 41B by using the refrigeration cycle as mentioned above, the function can be implemented that the temperature of the temperature controlling object equipment 9 is rapidly increased to a desired temperature. As an alternative, either the flow rate of the circulation pump 5B may be decreased or the circulation pump 5B may be stopped. In this case, the amount of heat exchange with the equipment cooling medium 41B can be suppressed, so that the temperature of the temperature controlling object equipment 9 can be rapidly increased.

As mentioned above, when installing on EV 1000 the air-conditioning system for a vehicle that includes a temperature adjustment system and an air-conditioning system in an integrated fashion, it may be expected that the piping that constitutes flow paths and the components are arranged within a narrow installation space in a complicated manner. Taking into consideration maintainability and necessary size- and cost reduction for the air-conditioning system for a vehicle, and so on, it is desirable to simplify the construction of the system by size reducing, number decreasing or sharing of components when mounting the air-conditioning system for a vehicle on EV 1000.

Accordingly, the circulation path of first heat transfer system (equipment cooling circuit 91B) in which a heat medium for controlling the temperature of the heat-generating body circulates, which is thermally connected to the refrigeration cycle system (refrigeration cycle circuit 90) with refrigerant circulated through a first intermediate heat exchanger (cooling heat exchanger 4B), and the circulation path of a second heat transfer system (air-conditioning circuit 91A) in which a heat medium for controlling the air condition in the vehicle interior is circulated, which are thermally connected to the refrigeration cycle system through a second intermediate heat exchanger (air-conditioning heat exchanger 4A), are made to communicate with each other, and a reservoir tank (receiver 2) for regulating the pressure in the circulation path of the first and second heat transfer systems is provided such that it is common to both the first and second heat transfer systems.

In the above-mentioned air-conditioning system for a vehicle, the components thereof can be used in common to the first and second heat transfer systems, so that the air-conditioning system for a vehicle can be simplified in construction. The simplification of the construction of the air-conditioning system for a vehicle leads to improvement of maintainability of the air-conditioning system for a vehicle installed in EV 1000 and contributes to size reduction and cost reduction of the air-conditioning system for a vehicle.

A drainage mechanism for draining heat medium that flows through the circulation systems of the first and second heat transfer paths may be provided in common to the first and second heat transfer systems.

In the case of EV 1000 on which the air-conditioning system for a vehicle is mounted, when a further size reduction and a further increase in output power of the heat-generating body are required, it is necessary to further increase the performance of the system to cool the heat-generating body in order to cope with that requirement. In this case, as an alternative, it may be considered to further increase in performance of the system to cool the heat-generating body by additional heat exchangers or by increasing the capacity of the heat exchanger. However, taking into consideration the necessity of size- and cost reduction, it is desirable that the further increase in performance is achieved without additional heat exchangers or increase in capacity of the heat exchanger.

To this end, the air-conditioning system for a vehicle may be provided with a circulation path connection control unit, such that the circulation path of first heat transfer system (equipment cooling circuit 91B) in which a heat medium for controlling the temperature of the heat-generating body circulates, which is thermally connected to the refrigeration cycle system (refrigeration cycle circuit 90) with the refrigerant circulated through a first intermediate heat exchanger (cooling heat exchanger 4B), and the circulation path of second heat transfer system (air-conditioning circuit 91A) in which a heat medium for controlling the air condition in the vehicle interior is circulated, which is thermally connected to the refrigeration cycle system through a second intermediate heat exchanger (air-conditioning heat exchanger 4A), can be connected in series to each other. When it is requested to make the heat exchange amount of the heat medium supplied to the heat-generating body larger than the heat exchange amount of the heat medium with the refrigerant by one intermediate heat exchanger, the connection of the circulation paths of the first and second heat transfer systems is controlled by the circulation path connection control unit such that the heat medium supplied to the heat-generating body flows through the first and second intermediate heat exchangers in series.

Alternatively, the air-conditioning system for a vehicle may be provided with a circulation path connection control unit, by which the circulation path of first heat transfer system, which is thermally connected through a first intermediate heat exchanger to the refrigeration cycle system with circulating refrigerant and through which a heat medium circulated for controlling the temperature of two heat-generating bodies, is connected to one of the two heat-generating bodies, , and the circulation path of second heat transfer system, which is thermally connected through a second intermediate heat exchanger with the refrigeration cycle system and through which a heat medium for controlling the air condition in the vehicle interior is circulated, is connected to the other one of the two heat-generating bodies, respectively. Then, the connection of the circulation paths is switched by a circulation paths connection switching unit such that the heat medium of the first heat transfer system is supplied to one of the heat-generating bodies and the heat medium of the second heat transfer system is supplied to the other of the heat-generating bodies. The amount of heat exchange between the two heat-generating bodies and the heat media of the first and second heat transfer systems is larger than the amount of heat exchange between the two heat-generating bodies and the heat medium of the first heat transfer system.

With the above-mentioned air-conditioning system for a vehicle, the heat exchange amount between the heat-generating bodies can be increased, so that the performance of the system for temperature control of the heat-generating bodies can be increased. As a result of improvement of the performance of the system with respect to temperature control of the heat-generating bodies, when a further size reduction and a further increase in output are demanded, it is possible to meet such a demand. In addition, the demand is accomodated without increase in size of the air-conditioning system for a vehicle.

In the case of EV 1000 shown in FIG. 19, explanation is made on an example in which the motor generator 200 and the inverter 300 are separate. However, the motor generator 200 and the inverter 300 may be integrated into one body, for example, by fixing the casing of the inverter 300 on the casing of the motor generator 200 to integrate them. In case where the motor generator 200 and the inverter 300 are integrated, arrangement piping in which heat medium for temperature adjustment flows becomes easier, so that the air-conditioning system for a vehicle can be constructed more simply.

### [Concrete example of temperature controlling object equipment 9]

The temperature controlling object equipment 9 provided in the equipment cooling circuit 91B is an equipment which is installed in the vehicle and must be temperature controlled to be within a predetermined range during the vehicle driving. As concrete examples of the temperature controlling object equipment 9, a motor for driving, an inverter for driving the motor, a battery for driving, a speed reduction mechanism (gearbox), and so on, may be referred.

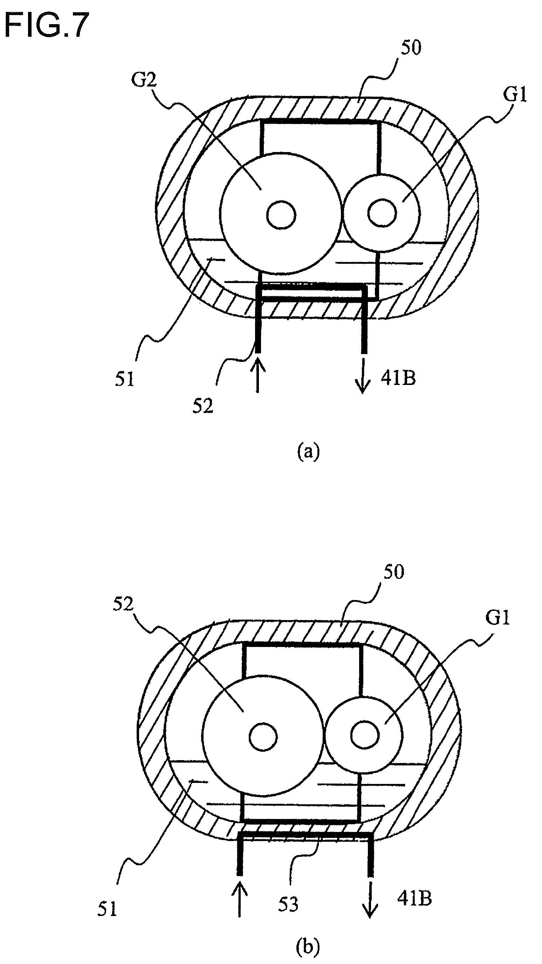

FIG. 7 shows a cooling structure of a gearbox. In FIG. 7(a), a case 50 that accommodates therein gears G1, G2 is filled with lubricating oil 51. In a lubricating oil pool, the piping 52 for the cooling medium 41B is arranged to cool or warm the lubricating oil 51 directly. As shown in FIG. 7(b), a conduit 53 for the equipment cooling medium 41B may be formed directly in the case 50 of the gearbox.

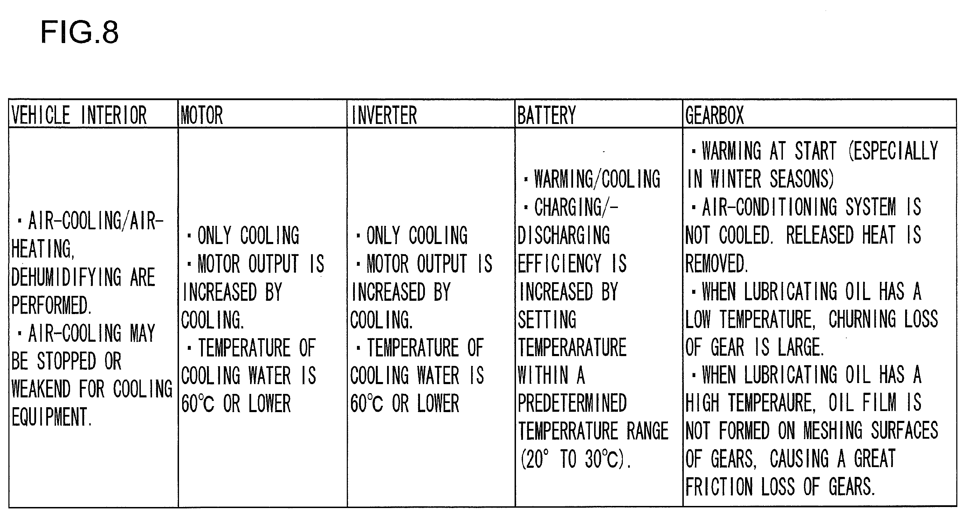

In case where temperature control is performed by providing the equipment cooling circuit 91B with the temperature controlling object equipment 9, temperature control must be performed depending on the thermal property of each of equipment. FIG. 8 is a figure showing conditions of temperature control for each object of temperature controlling. As examples of objects for temperature controlling , the vehicle interior and the temperature controlling object equipment 9 may be referred. As for the temperature controlling object equipment 9, temperature controll conditions of the motor, inverter, battery and gearbox are shown.

### (Vehicle interior)

Regarding the air-conditioning of the vehicle interior, air-cooling/air-heating and dehumidifying are performed appropriately based on temperature settings, external air temperature and so on. However, as described later, sometimes air-cooling is stopped or weakened for cooling the temperature controlling object equipment 9.

### (Motor and inverter)

The efficiencies of the motor and the inverter may vary depending on their temperature. Generally, it is known that if the torque and number of rotations are the same, the lower the efficiencies are, the higher the temperatures are. Due to this, the temperatures of the motor and the inverter is changed, through which the efficiency of a motor or an inverter is changed; in temperature control, only cooling is performed. The temperature of the equipment cooling medium 41B supplied to the motor and the inverter is controlled to be, for example, not higher than 60°C.

### (Battery)

In order to fully exploit the battery capacity of charging/discharging, i.e. in order to optimize the efficiency of charging/discharging, it is necessary for the battery temperature to be kept within a predetermined temperature range. To this end, warming is necessary when the battery temperature is low (for example, upon start-up when the external air temperature is low), whereas cooling is necessary when the battery temperature becomes too high due to heat generation by the battery itself. The temperature range in which the battery can efficiently operate varies for the type of the battery; in the case of lithium ion batteries, they can operate efficiently within the range of 20°C to 30°C.

### (Gearbox)

In the case of the gearbox as shown in FIG. 7, the viscosity of the lubricating oil 51 in the case gives adverse effects, causing loss upon driving. When the temperature of the lubricating oil 51 is low (as in the case of start-up when the external air temperature is low), the churning loss of the gears G1, G2 increases. Conversely, in case when the temperature of the lubricating oil is too high, oil film formation on meshing surfaces of the gears G1, G2 becomes insufficient, leading to increase of friction loss. Therefore, upon start-up in winter seasons and so on, warming becomes necessary. On the other hand, when the temperature of the lubricating oil is high, it becomes necessary to enhance heat radiation from the gearbox. The temperature of the lubricating oil is controlled to be within the temperature range of, for example, 30°C to 100°C.

### [Arrangement of temperature controlling object equipment 9]

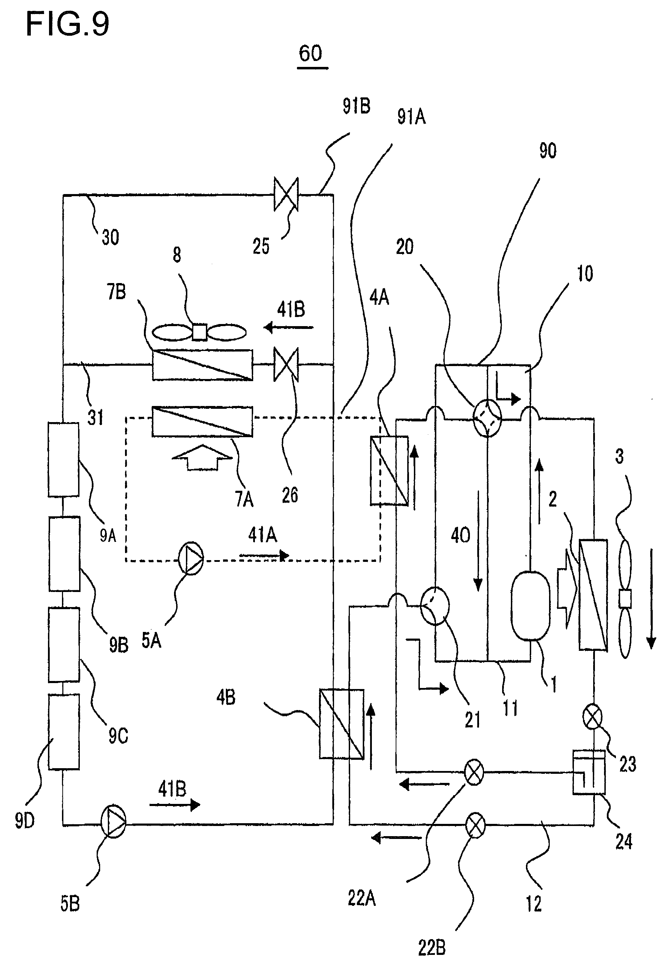

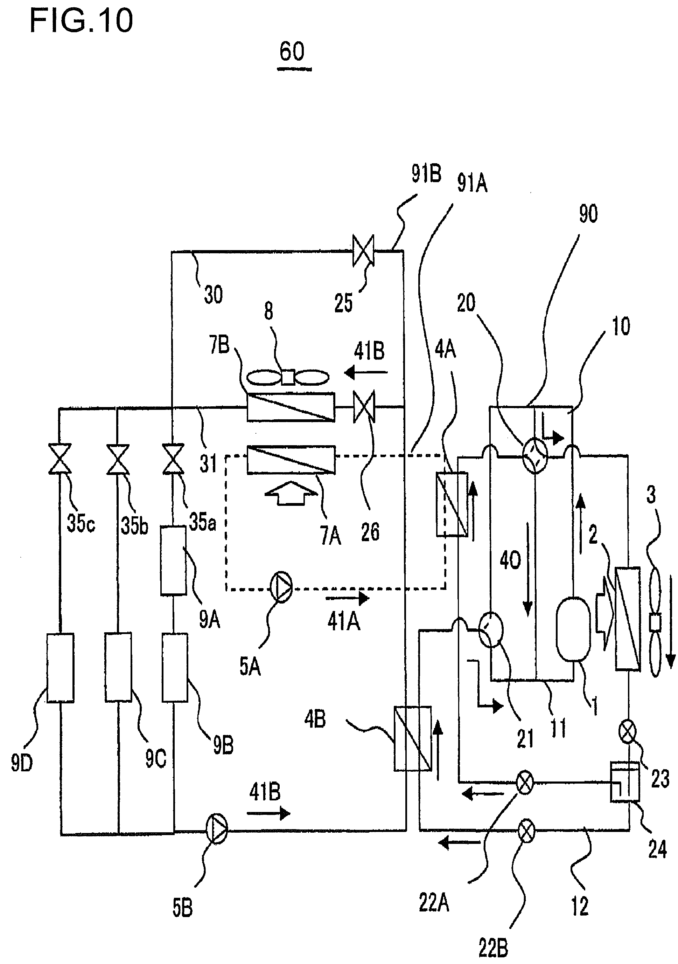

FIGS. 9, 10 are figures illustrating an arrangement of a plurality of pieces of temperature controlling object equipment 9. In case where a plurality of pieces of temperature controlling object equipment 9A to 9D is provided in the equipment cooling circuit 91B, there are two structures, i.e., a structure of series arrangement as shown in FIG. 9 and a structure of parallel arrangement as shown in FIG. 10.

In case where the plurality of pieces of temperature controlling object equipment 9A to 9D is arranged in series, the heat-generating bodies are arranged so that the higher the setup temperature of an heat-generating body is, the more to upstream side with respect to the flow of the equipment cooling medium 41B the heat-generating body is arranged. Here, let us consider a case in which an inverter, a motor, a battery, and a gearbox are provided as the temperature controlling object equipment 9A to 9D. In this case, among the setup temperatures for them, the setup temperature for the inverter 9A is the lowest and the setup temperature increases for the motor 9B, the battery 9C (corresponding to the battery 100 in FIG. 1), and the gearbox 9D in this order.

FIG. 9 illustrates the case of the above-mentioned air-cooling operation, in which the equipment cooling medium 41B is cooled by the refrigerant 40 of the refrigeration cycle circuit 90 at the cooling heat exchanger 4B. This causes the equipment cooling medium 41B that has a low temperature to flow into the inverter 9A. Each time when the equipment cooling medium 41B passes each piece of equipment 9A to 9C, the equipment cooling medium 41B absorbs heat from the equipment to become a higher temperature. That is, the temperature of the equipment cooling medium 41B at the inlet of each piece of equipment 9A to 9D becomes higher in order of the pieces of equipment 9A to 9D. It should be noted that in the construction shown in FIG. 9, in case when the battery 5C and the gearbox 5D are warmed (equipment heating operation), the motor 9B and the inverter 9A are also warmed.

On the other hand, in case where the temperature controlling object equipments 9A to 9D are arranged in parallel, the equipments that require warming (the battery 9C, the gearbox 9D) and the equipments that do not require warming (the inverter 9A, the motor 9B) are arranged so as to be in separate circuits as shown in FIG. 10. In the example shown in FIG. 10, a line in which the inverter 9A and the motor 9B are arranged in series, a line in which only the battery 9C is arranged, and a line in which only the gearbox 9D is arranged are connected in parallel. On the inlet sides of the lines are provided two-way valves 35a to 35c, respectively. With this arrangement, every line can be controlled to be in an optimum temperature.

FIG. 10 shows the case of air-cooling operation. In case where each of the equipment is cooled, the two-way valves 35a to 35c provided on the respective lines are opened to introduce the equipment cooling medium 41B into each of the equipment. It should be noted that in the case of air-heating/cooling operation shown in FIG. 5, each of the equipment can be cooled. In case when the battery 9C and the gearbox 9D are warmed, the heating operation shown in FIG. 6 is performed; the two-way valves 35b, 35c are opened to cause the cooling medium 91B that is in a high temperature to flow in.

All the plurality of pieces of temperature controlling object equipment 9A to 9D can be arranged in parallel to each other. However, this is not desirable since the number of components increases. The battery 9C and the gearbox 9D may be arranged in series. However, it is preferred to arrange them in separate lines in parallel like the construction shown in FIG. 10, taking into consideration the situation of how the components are mounted on the vehicle in that the battery 9C is arranged beneath the seats and the gearbox 9D is arranged near the driving shaft.

According to the present embodiment, use of the cooling/air-heating system 60 having the above-mentioned construction enables control of vehicle interior air-conditioning and the cooling and warming of the equipment such as the motor and the inverter individually. The control device 61 controls the cooling/air-heating system 60 so that the temperature of the vehicle interior and the temperature of the equipment become at their setup temperatures, respectively.

### [Temperature control for vehicle interior and equipment]

According to the present invention, as shown in FIG. 1, the control device 61 acquires operation information of the vehicle (speed information, accelerator pedal depressing amount information, etc.) and travel plan information and controls the cooling/air-heating system 60 based on the acquired information as well as on the detected temperature of each object of temperature control and on the detected temperature of the cooling medium. For example, variations in temperature of each of the temperature controlling object equipment and of the cooling medium are predicted and the cooling and warming of each of the equipment is performed efficiently by changing the setup temperatures of the cooling media 41A, 41B based on the prediction to control the temperature of the equipment to become optimal.

### (Explanation of control operation)

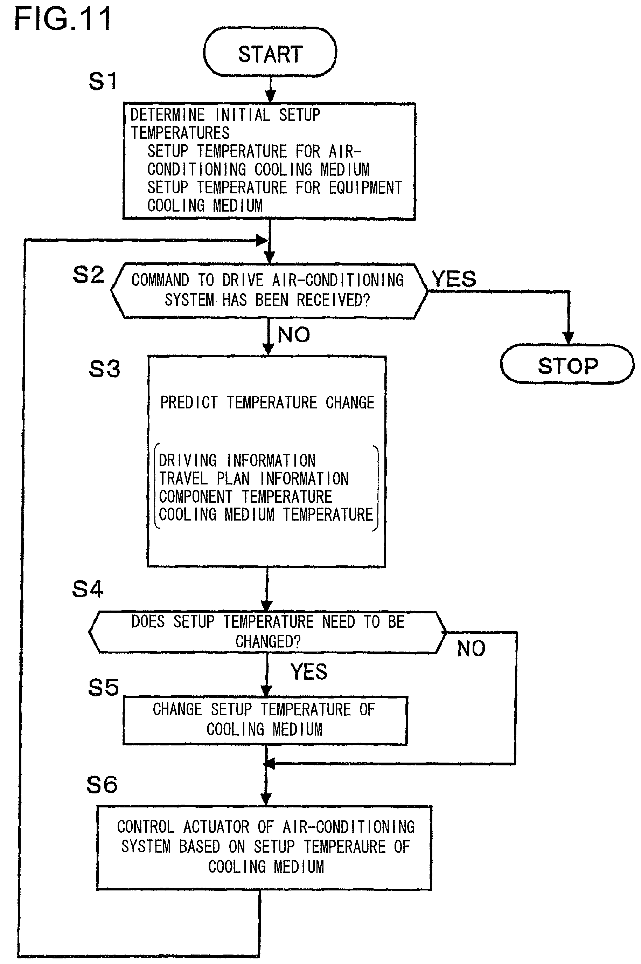

FIG. 11 is a flowchart illustrating a control processing program in the control device 61. The microcomputer provided in the control device 61 performs the processing shown in FIG. 11 by software installed therein. The microcomputer starts the processing of the program illustrated in FIG. 11 when the ignition key switch of the vehicle is turned on.

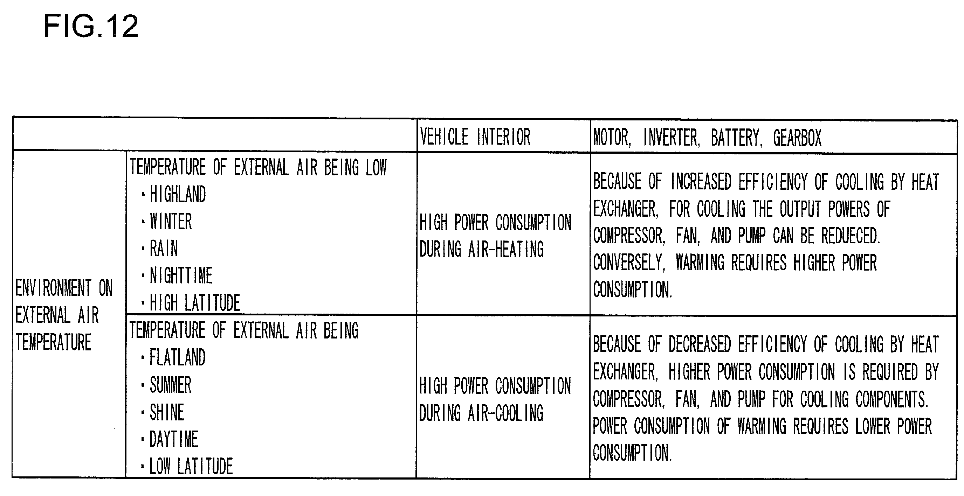

In step S1, an initial setup temperature of the air-conditioning cooling medium 41A used for the air-conditioning of the vehicle interior and an initial setup temperature of the equipment cooling medium 41B used for cooling/warming of the equipment 9A to 9D (FIG. 9) are determined. As the initial setup temperature , it may be assumed a temperature that is suitable for vehicle driving on a level road at a predetermined speed at a normal temperature of the external air. FIG. 12 shows a relationship between the temperature of the external air and the air-conditioning of the vehicle interior and each of the equipment.

In step S2, it is determined whether a command to drive the air-conditioning system has been received. In the case of a construction in which the driving of the air-conditioning system is turned on/off by turning on/off of the driving of the vehicle, whether a command to drive the air-conditioning system has been received is determined based on on/off of the vehicle drive on/off switch. If the result of the determination in step S2 is YES, the program illustrated in FIG. 11 is ended. On the other hand, if the result of the determination in step S2 is NO, the process proceeds to step S3.

In step S3, temperature variations of the vehicle interior, the temperature controlling object equipments 9A to 9D, and the cooling media 41A, 41B are predicted based on at least one of the driving information, the travel plan information, the detected temperature of each of the temperature controlling object equipment, and the detected temperature of the cooling medium.

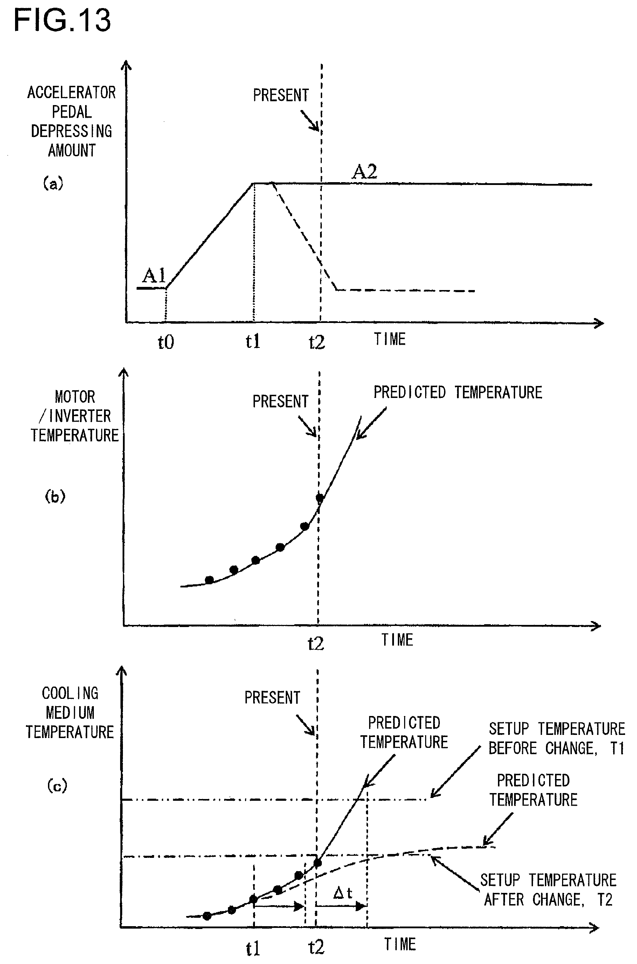

Here, an example of prediction of temperature variation is explained with reference to FIG. 13. In FIG. 13, (a) illustrates a change in accelerator pedal depressing amount, (b) illustrates the temperature variation of the motor or the inverter, and (c) illustrates the temperature variation of the equipment cooling medium 41B. In each of (a), (b) and (c), the horizontal axis indicates time, with the position t2 indicated in broken line representing present time. Filled circles in FIG. 13(b), (c) indicate actually measured temperatures.

As shown in FIG. 13(a), the accelerator pedal depressing amount is increased between time t0 and time t1 to change from value A1 to value A2. After time t1, it is maintained at the value A2. When the accelerator pedal depressing amount is changed from A1 to A2 (>A1) as mentioned above, the motor output increases and at the same time the heat generation amounts of the motor and the inverter increase, so that the temperature of motor/inverter is varied as shown in FIG. 13(b). Further, the temperature of the cooling medium 41B that cools the motor/inverter shows a tendency of variation similar to that of the temperature of the motor/inverter as shown in FIG. 13(c).

The temperature of the motor/inverter and the temperature of the cooling medium are in an upward trend at present time (time t2). When the temperature of the motor/inverter and the temperature of the cooling medium are predicted based on the temperature of the motor/inverter and the temperature of the cooling medium as well as the accelerator pedal depressing amount shown in FIG. 13(a), there are obtained respective predicted temperatures as shown in FIG. 13(b), (c) in solid lines.

The setup temperature T1 shown in FIG. 13(c) is a setup temperature upon performing temperature control of the equipment cooling medium 41B (target temperature) and the temperature is controlled to be at the setup temperature T1 up to the present time (t2). That is, upon calculating a predicted temperature (solid line), the setup temperature T1 is used. The predicted temperature (solid line) is still increasing on or after present time (t2), so that it is predicted to exceed the setup temperature T1 within the predetermined time Δt.

In the case of the conventional air-conditioning system, at the time when the actually measured temperature of the cooling medium exceeds the setup temperature T1, or the temperature of the motor/inverter exceeds the target temperature, the system is configured so that the cooling performance by the equipment cooling medium 41B is increased to lower the temperature of the motor/inverter. As a result, there is the possibility that the motor does not output a power corresponding to the accelerator pedal depressing amount A2, since there is a time delay from the time when the accelerator pedal depressing amount is changed from A1 to A2 to the time when the temperature of the cooling medium exceeds the setup temperature T1 and since it takes some time for the temperature of the cooling medium to be lowered sufficiently after it has once exceeded the setup temperature T1.

Then, according to the present embodiment, if the predicted temperature at a time point when a predetermined time Δt has elapsed from a predicted time (t2) exceeds the setup temperature T1 of the present time, the setup temperature is set at a lower temperature T2 (<T1). As a result, the actual temperature change of the cooling medium becomes smaller than the temperature change of the predicted temperature (solid line), so that a desired motor output can be achieved with sufficient margin. Since the air-conditioning with a high performance can be started in advance, it is possible to cope with the temperature change of the equipment (the motor, the inverter). By changing the setup temperature in earlier phase, an abrupt increase in the rotational speed of the compressor 1, the exterior fan 3, the interior fan 8, and the circulation pump 5B can be prevented, so that sound noises can be suppressed.

The broken line shown in FIG. 13(a) indicates the case in which the accelerator pedal depressing amount is returned to A1 again after it is increased to A2. In this case, the time in which the accelerator pedal depressing amount A2 is maintained is short, so that the predicted temperature becomes as indicated in broken line in FIG. 13(c). Though the temperature of the cooling medium at present (time t2) is not so different from that of the above-mentioned case, the information of accelerator pedal depressing amount (i.e. driving information) at present differs largely as shown with the solid line and the broken line in FIG. 13(a), so that when prediction is performed taking such driving information into consideration, the predicted temperature of the cooling medium may differ greatly. As a result, controlling of the setup temperature based on the predicted temperature differ between both cases.

Turning back to the flowchart shown in FIG. 11, in step S4, it is determined whether it is necessary to change the setup temperature of the cooling medium 41A, 41B based on the predicted temperature change obtained in step S3. For example, in a scene where the performance of cooling is increased as mentioned above, whether it is necessary to change the setup temperature is determined by determining whether the predicted temperature after the predetermined time Δt has elapsed exceeds the setup temperature at present.

If it is determined in step S4 that the change is necessary, the process proceeds to step S5 to change the setup temperature of the cooling medium. Thereafter, the process proceeds to step S6. On the other hand, if it is determined that no change is necessary as the predicted temperature as shown in the broken line in FIG. 13(c) is calculated, step S5 is skipped and the process proceeds to step S6.

In step S6, each actuator of the cooling/air-heating system 60 as shown in FIG. 1 is controlled so that the temperature of the cooling medium at present will be changed based on the changed setup temperature. In the case of the example shown in FIG. 13, the temperature of the equipment cooling medium 41B is controlled to be lowered corresponding to the increase in the accelerator pedal depressing amount, i.e. corresponding to increase in motor output, the actuator is controlled so that the cooling performance of the equipment cooling circuit 91B can be increased.

In the above-mentioned explanation, though the setup temperature of the cooling medium is changed in step S4 to step S6, it is acceptable that the setup temperature of the temperature controlling object (vehicle interior, each of equipment) is changed. In step S6, the cooling/air-heating system 60 is controlled based on the setup temperature of each temperature controlling object.

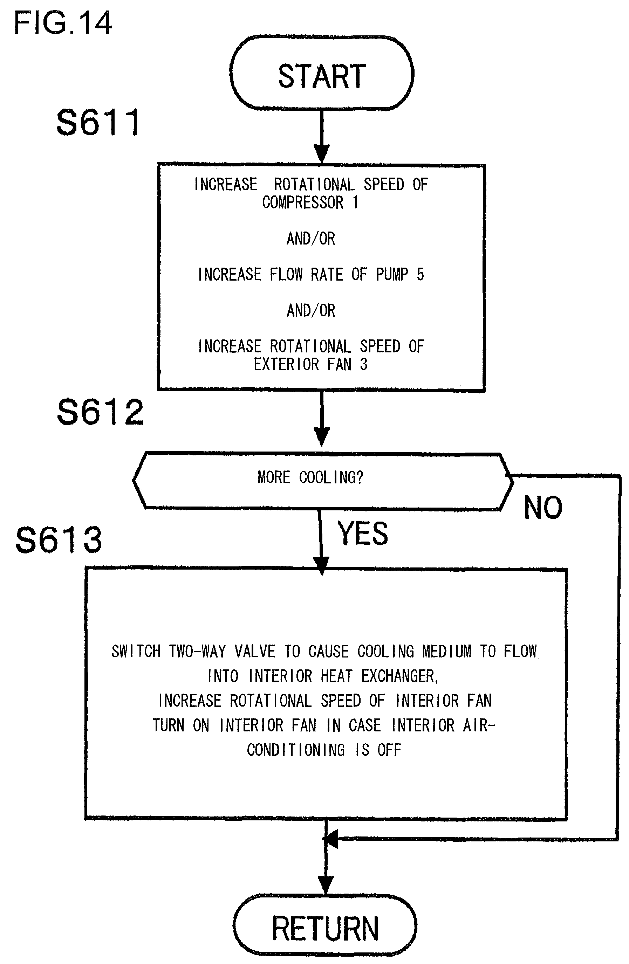

FIG. 14 illustrates a concrete processing in case where the cooling performance of the equipment is increased in step S6. In step S611, there is implemented at least one of the followings for increase in cooling performance; an increase in rotational speed of the compressor 1, an increase in flow rate of the circulation pump 5B, and an increase in rotational speed of the exterior fan 3. When the rotational speed of the compressor 1 is increased or the rotational speed of the exterior fan 3 is increased, the cooling performance of the equipment cooling medium 41B with the refrigeration cycle is increased. By increasing the flow rate of the circulation pump 5B, heat absorption from the motor, which is a temperature controlling object equipment 9, to the equipment cooling medium 41B and heat release from the equipment cooling medium 41B to the refrigerant 40 increase, respectively.

In step S612, it is determined whether it is necessary to further increase the cooling performance in addition to the increase in cooling performance in step S611. If the result of the determination in step S612 is YES, the process proceeds to step S613 to open the two-way valve 26 in the equipment cooling circuit 91B to cause the equipment cooling medium 41B to flow into the interior heat exchanger 7B and increase the rotational speed of the interior fan 8. It should be understood that if the interior air-conditioning is off, the interior fan 8 is turned on. In this way, heat emission from the equipment cooling medium 41B to the vehicle interior is increased to improve removal of heat from the motor.

Since warm air flows into the vehicle interior as a result of the control in step S613, the effect of air-cooling is weakened when the vehicle interior is air-cooled whereas the effect of air-heating is enhanced if the vehicle interior is air-heated. Even if the interior air-conditioning is off, it may sometime happen that the interior fan 8 automatically starts rotation to blow out warm air into the vehicle interior, making the driver uncomfortable. To avoid such uncomfortableness, an air venting channel may be arranged to prevent air from flowing into the vehicle interior. The same will do in case the air-cooling performance or air-heating performance of the vehicle interior, or the warming performance of the equipment is increased.

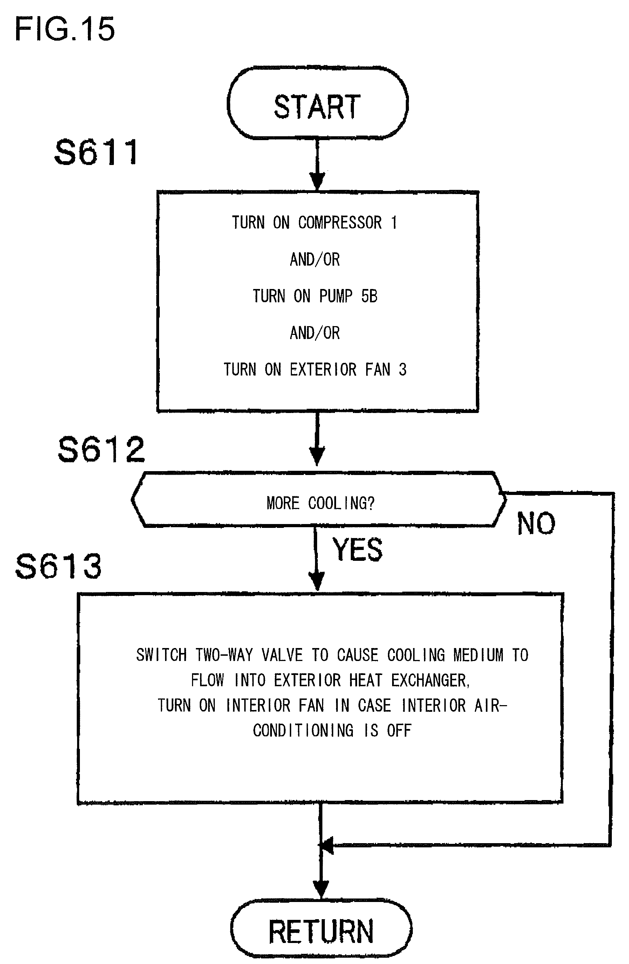

FIG. 14 illustrates a control when the compressor 1, the circulation pump 5B, and the exterior fan 3 are variably controlled., wherein in the case that the compressor 1, the circulation pump 5B, and the exterior fan 3 are configured to be on/off controlled, then at least one of the compressor 1, the circulation pump 5B, and the exterior fan 3 is turned from off to on as in step S611 in FIG. 15.

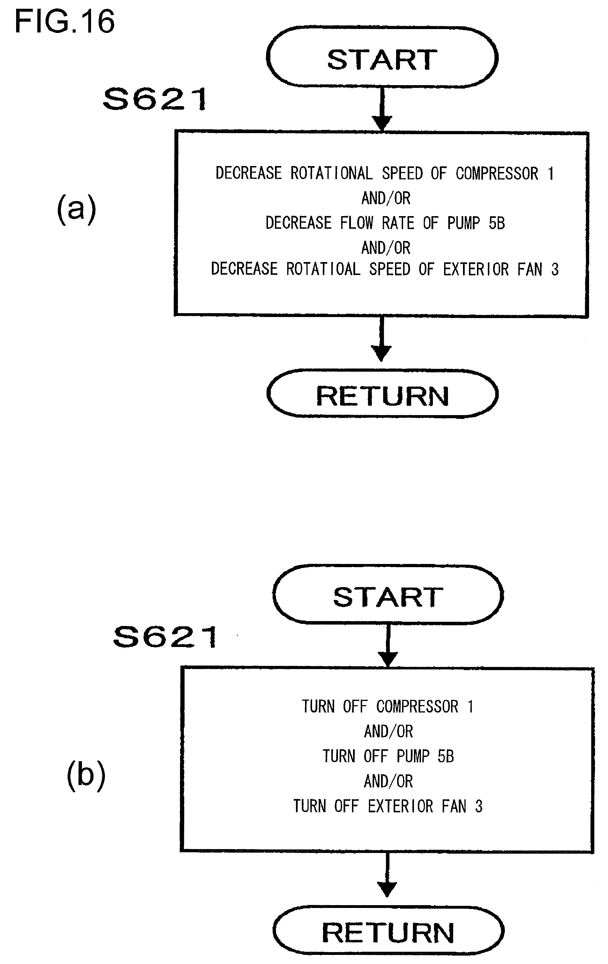

On the other hand, in case that the cooling performance is decreased in step S6 in FIG. 11, controlling such as that shown in FIG. 16 is performed. In FIG. 16, (a) indicates the case where the compressor 1, the circulation pump 5B, and the exterior fan 3 are variably controlled, and (b) indicates the compressor 1, the circulation pump 5B, and the exterior fan 3 are on/off controlled. In the case of FIG. 11(a), in step S621, there is performed at least one of a decrease in rotational speed of the compressor 1, a decrease in flow rate of the circulation pump 5B, and a decrease in rotational speed of the exterior fan 3. On the other hand, in step S621, at least one of the compressor 1, the circulation pump 5B, and the exterior fan 3 is turned from on to off.

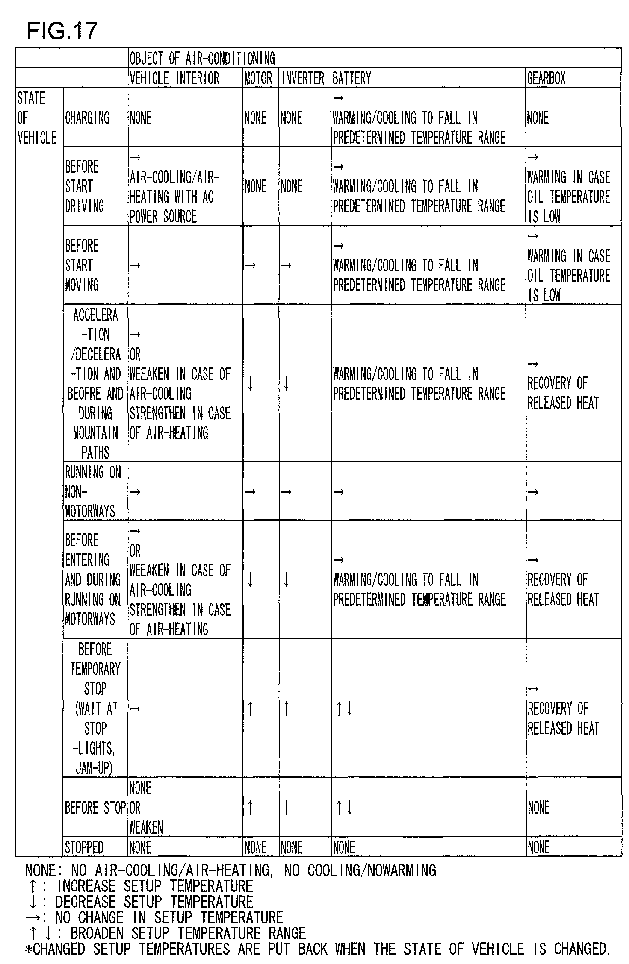

In the above-mentioned explanation of FIG. 13, prediction of temperature in a situation where the accelerator pedal press-down amount is changed and the change of the setup temperature of the equipment cooling medium 41B are explained, and in FIG. 17 summarized are other situations. In FIG. 17 shown are for settings that the setup temperature of the temperature controlling object (vehicle interior, each of temperature controlling object equipment) is changed.

The states of the vehicle are determined, based on detection signals from the accelerator sensor 66 and vehicle speed sensor 67 as driving information and the travel plan information from the navigator 68. In FIG. 17, nine types of vehicle states are described, which include "charging", "before start driving", "before start moving", "before and during acceleration/deceleration and driving on sloping roads", "driving on non-motorways", "before entering and during running on motorways", "before temporary stop (for example, waiting at stoplights, jam-up, etc.)", "before stop", and "stopped". However, the vehicle states are not limited thereto. The objects of air-conditioning include the vehicle interior, the motor, the inverter, the batteries, and the gearbox.

As in the case shown in FIG. 13, the intention (to accelerate or the like) of the driver can be determined from the driving information (vehicle speed, accelerator pedal depressing amount). The travel plan information includes road information (jam-up, slope of road) on the way to the destination and destination information given by the navigation device 68. The amount of heat generation of the temperature controlling object equipment is predicted based on the output of the motor and output of the interior air-conditioning expected from the above, and the setup temperature of the vehicle interior as well as the setup temperature of the temperature controlling object equipment are changed.

For example, the intention of acceleration can be predicted from the driving information as shown in FIG. 13. In that case, the setup temperatures of the motor and the inverter are set low in order to cool the motor and the inverter. In case when driving on sloping roads are predicted from the travel plan information (the fourth column from above in FIG. 17), the setup temperatures of the motor and the inverter are set lower than those initially set. The initial setting is made, for example, assuming ordinary driving on a level road. The setup temperature of the battery is not changed, and warming or cooling is performed by controlling the flow of the cooling medium 41B so that the temperature of the battery falls within a predetermined temperature range that enables efficient charging/discharging (structure in FIG. 10). The setup temperature of the gearbox is not changed and the released heat is recovered.

During charging as shown in FIG. 17 (first column), the setup temperature is not changed and warming/cooling is controlled so that the battery temperature during charging falls within the predetermined temperature range. For the vehicle interior, the motor, the inverter, and the gearbox, cooling/air-heating or cooling/warming is not performed.

"Before start driving" given in the second column of FIG. 17 is for the case when the battery is charged from an AC power source by parking. In this case, cooking/air-heating of the vehicle interior is performed with the AC power source so that the temperature of the vehicle interior falls within a comfortable temperature range at the time of start of running.

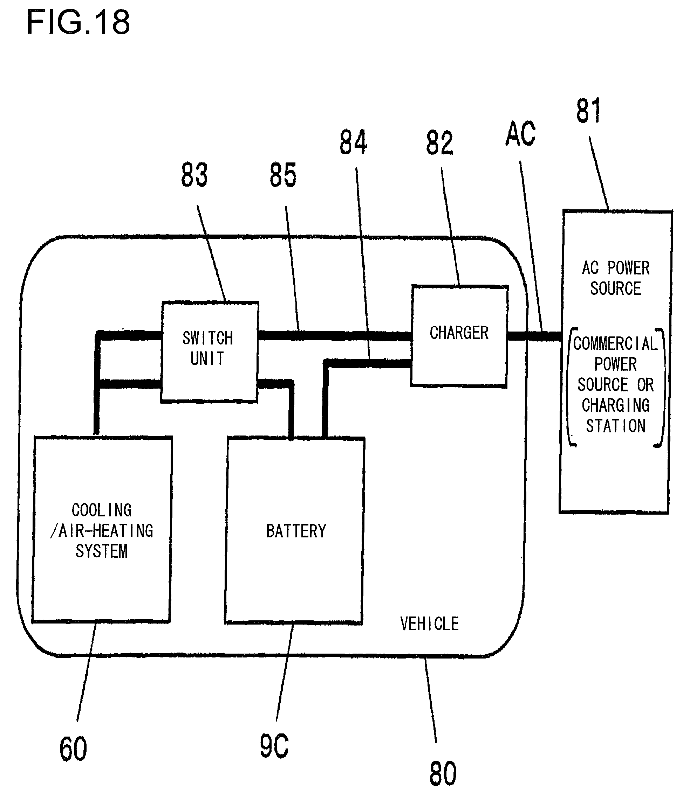

FIG. 18 is a drawing that explains this vehicle state. Upon charging, a commercial power source or the AC power source 81 of the charging station is connected to the charger 82 installed in the vehicle 80. Two DC lines 84, 85 extend from the charger: the DC line 84 is connected with the battery 9C and the DC line 85 is connected with the cooling/air-heating system 60 via the switch unit 83. The cooling/air-heating system 60 can be driven either by the battery 9C installed in the vehicle or by the external AC power source by switching them by the switch unit 83.

Upon charging before driving, the switch unit 83 is switched so that the charger 82 and the cooling/air-heating system 60 are connected with each other. During charging the battery, the cooling/air-heating system 60 is driven by using the external AC power source 81 to perform air-conditioning (air-cooling/air-heating) of the vehicle interior. The battery 9C is cooled/warmed so that the battery temperature during charging becomes within the predetermined temperature range. Regarding the gearbox, when the oil temperature is low, warming is performed in order to prepare for driving. The setup temperatures of the vehicle interior, the battery and the gearbox are not changed.

As mentioned above, the power of battery is not used for driving the cooling/air-heating system 60, and therefore charging of the battery is completed in a short time and efficiently. The battery temperature is controlled to be within the predetermined range by the cooling/air-heating system 60, so that the efficiency of charging is improved.

Also during the charging, as shown in the first column of FIG. 17, the power from the external power source instead of the power of the battery may be used to drive the cooling/air-heating system 60 upon controlling temperature so that the battery temperature falls within the predetermined temperature range.

In the vehicle state (before star moving) described in the third column of FIG. 17, cooling/warming of the battery and warming of the gearbox are performed by keeping all the setup temperatures of the temperature controlling objects as unchanged in order to prepare for driving taking place immediately thereafter. As in the vehicle states described in the second and third columns (before start driving, before start moving), by warming the battery and the gearbox before driving the vehicle, the improvement of efficiency upon running can be achieved.

As in the vehicle state described in the fifth column of FIG. 17 (upon running on non-motorways), that is, in the standard vehicle state, the setup temperatures of all the temperature controlling objects are kept as unchanged.

Also in the vehicle state described in the sixth column of FIG. 17 (before entering and driving on motorways), like the running on sloping roads, the motor output power becomes large, so that the setup temperature and controlling of air-conditioning similar to the case of the vehicle state described in the fourth column are used.

The vehicle state described in the seventh column of FIG. 17 corresponds to the case where a temporary stop such as waiting at stoplights or upon jam-up is predicted from the travel plan information. In the state that the vehicle is in a temporary stop state, the heat generation amount from the motor and the inverter is smaller than that of the running state, and the temperature will not increase with lower cooling performance. Accordingly, the setup temperatures of the motor and the inverter are increased to weaken the cooling performance. As a result, energy can be saved. Regarding the setup temperature of the battery, the temperature range is broadened.

The vehicle state in the eighth column of FIG. 17 corresponds to a vehicle state (before stop) where stopped vehicle is predicted from the travel plan information such as upon the arrival at the destination. In this case, the setup temperatures of the motor, the inverter, and the battery are set in the same manner as in the case of "before temporary stop". The air-cooling/air-heating of the vehicle interior and cooling/warming of the gearbox are stopped in advance to save energy since it is predicted that the driving of the vehicle will be stopped soon. Upon the stopped state as in the ninth vehicle state, the air-cooling/air-heating of the vehicle interior and cooling/warming of all pieces of the temperature controlling object equipment are stopped.

It should be understood that during the air-conditioning of the vehicle interior and cooling/warming of each of equipment, when the temperature of each equipment is approximately in its upper limit temperature, the cooling/warming for each equipment has a higher priority over the air-conditioning of the vehicle interior.

In the above-mentioned control of the flowchart shown in FIG. 11, the temperature variation is predicted in step S3 and it is configured to change the setup temperature (target temperature) of the cooling medium based on the result of the prediction. However, the vehicle state shown in FIG. 17 may be predicted from the driving information and the travel plan information, and then the change of the setup temperature may be determined directly from the result of the prediction.

As mentioned above, the air-conditioning system for a vehicle includes: a refrigeration cycle circuit 90, having a compressor 1 that compresses a first cooling medium 40 and a first heat exchanger 2 that exchanges heat with external air; and a cooling/air-heating system 60 provided with circuits 91A, 91B that circulate a second cooling medium (cooling medium 41A, 41B) to a temperature controlling object (a motor, an inverter, a battery, a gearbox, a vehicle interior) to perform cooing/air-heating, and a third heat exchanger 4A, 4B, that exchanges heat between the cooling medium 40 and the cooling medium 41A, 41B. The control device 61 predicts a forward temperature of the temperature controlling object based on at least one of detected temperatures of temperature sensors 62, 63 and a driving state of the vehicle at present, changes a target temperature of the temperature controlling object or a target temperature of the cooling medium 41A, 41B based on the result of the prediction, and controls the refrigeration cycle circuit 90 and the circuits 91A, 91B based on the changed target temperature to control cooling/air-heating of the temperature controlling object.

As shown in FIG. 17, with respect to the vehicle state that is predicted based on the travel plan information, etc. of the navigation device 68, the target temperature (setup temperature) of each temperature controlling object may be changed in advance.

Instead of predicting a temperature of the temperature controlling object, a running state may be predicted based on the travel plan information input by the navigation device 68 provided on the vehicle, and the target temperature of the temperature controlling object or the target temperature of the cooling medium 41A, 41B may be changed based on the result of the prediction.

As a result, by performing air-cooling/air-heating depending on the vehicle state, each temperature controlling object may be maintained effectively and at the same time efficient air-cooling/air-heating can be performed. Since the air-cooling/air-heating is performed in advance by predicting the vehicle state, delay in time of air-cooling/air-heating can be avoided and at the same time abrupt increase in rotational speed of the compressor 1, the exterior fan 3, the interior fan 8, the circulation pump 5A, 5B can be prevented, so that the effect of reducing noises can be expected.

For example, by using the above-mentioned vehicle speed and accelerator pedal depressing amount as the driving state, the temperatures of the motor and the inverter from the present time are predicted based on the driving state and the temperatures of the motor and the inverter, and the target temperatures of the motor and the inverter are changed based on the predicted temperatures. By increasing the cooling performance of the motor and the inverter in advance as mentioned above, it is possible to smoothly cope with an actual increase in the accelerator pedal depressing amount and avoid an excessive increase in temperature of the motor and the inverter due to the time lag.

As shown in FIG. 17, by changing in advance the target temperature (setup temperature) for each temperature controlling object with respect to the vehicle state predicted based on the travel plan information provided by the navigation device 68, the temperature of each temperature controlling object can be appropriately and quickly controlled corresponding to the situation.

When "before start running" of the vehicle is predicted from the travel plan information, etc., by performing air-cooling/air-heating of the vehicle interior and cooling/air-heating of the electromotive driving equipment (for example, cooling/warming of the battery and the gearbox) in advance, improvement of comfortableness and efficient driving can be achieved. In case the temperature of the electromotive driving equipment (for example, the inverter, the motor, the battery, the gearbox) is near at the target temperature, the cooling/warming of the electromotive driving equipment is controlled with higher priority over controlling the cooling/air-heating of the vehicle interior, so that a safe and efficient running state is not impaired by the influence of the cooling/air-heating of the vehicle interior.

The above described embodiments are exemplary and various modifications can be made. The present invention is not limited to the above-mentioned embodiments.

## Claims

1. An air-conditioning system for a vehicle, comprising:
a refrigeration cycle circuit (90) having a compressor (1) that compresses a first cooling medium (40) and a first heat exchanger (2) that exchanges heat between the first cooling medium (40) and external air;
a cooling circuit (91B) that circulates a second cooling medium (41A, 41 B) to an equipment for electric-powered driving, that is a temperature controlling object, to perform cooling/air-heating of the equipment for electric-powered driving; and
a second heat exchanger (4B) that exchanges heat between the first cooling medium (40) and the second cooling medium(41A, 41B);
a temperature detection unit (62, 63) that detects a temperature of the equipment for electric-powered driving;
a controller that controls the refrigeration cycle circuit (90) and the cooling circuit (91B) based on a temperature detected by the temperature detection unit (62, 63, 64, 65);
**characterized in that**, the air-conditioning system further comprises,
a prediction unit that predicts a forward temperature of the second cooling medium (41A, 41B) based on detected temperature detected by the temperature detection unit (62 - 65), an accelerator pedal depressing amount and the vehicle speed; and
a target temperature change unit that changes a target temperature of the second cooling medium (41A, 41B) based on a result of prediction by the prediction unit; wherein
the target temperature change unit changes the target temperature to a lower temperature when the accelerator pedal depressing amount is increased, and the controller controls the refrigeration cycle circuit (90) and the cooling circuit (91B) to control cooling/air-heating of the equipment for electric-powered driving based on the temperature detected by the temperature detection unit (62, 63) and the target temperature changed by the target temperature change unit.

2. An air-conditioning system for a vehicle according to claim 1, wherein
the prediction unit predicts a forward temperature taking into consideration a travel plan information that is input from a navigation unit (68) provided to the vehicle.

3. An air-conditioning system for a vehicle according to claim 1 or 2, wherein
the controller performs controlling of cooling/air-heating of the equipment for electric-powered driving with higher priority over controlling of cooling/air-heating of the vehicle interior, when a temperature of the equipment for electric-powered driving is in the vicinity of the target temperature.

## Patentansprüche

1. Klimaanlagensystem für ein Fahrzeug, das Folgendes umfasst:
eine Kühlzykluskreis (90), die einen Verdichter (1), der ein erstes Kühlmedium (40) verdichtet, und einen ersten Wärmetauscher (2), der Wärme zwischen dem ersten Kühlmedium (40) und der Außenluft tauscht, besitzt;
einen Kühlkreis (91B), der ein zweites Kühlmedium (41A, 41B) an eine Vorrichtung für einen elektrisch betriebenen Antrieb umwälzt, die ein Temperatursteuerobjekt ist, um eine Kühlung/Lufterwärmung der Vorrichtung für einen elektrisch betriebenen Antrieb durchzuführen; und
einen zweiten Wärmetauscher (4B), der Wärme zwischen dem ersten Kühlmedium (40) und dem zweiten Kühlmedium (41A, 41B) tauscht;
eine Temperatur-Detektionseinheit (62, 63), die eine Temperatur der Vorrichtung für einen elektrisch betriebenen Antrieb detektiert;
eine Steuereinheit, die den Kühlzykluskreis (90) und den Kühlkreis (91B) anhand einer Temperatur, die durch die Temperatur-Detektionseinheit (62, 63, 64, 65) detektiert worden ist, steuert;
**dadurch gekennzeichnet, dass** das Klimaanlagensystem ferner Folgendes umfasst:
eine Vorhersageeinheit, die eine Vorlauftemperatur des zweiten Kühlmediums (41A, 41B) anhand einer detektierten Temperatur, die durch die Temperatur-Detektionseinheit (62-65) detektiert worden ist, einen Betrag des Niederdrückens des Fahrpedals und die Fahrzeuggeschwindigkeit vorhersagt; und
eine Solltemperatur-Änderungseinheit, die eine Solltemperatur des zweiten Kühlmediums (41A, 41B) anhand eines Ergebnisses der Vorhersage durch die Vorhersageeinheit ändert; wobei
die Solltemperatur-Änderungseinheit die Solltemperatur auf eine niedrigere Temperatur ändert, wenn der Betrag des Niederdrückens des Fahrpedals erhöht wird, und die Steuereinheit den Kühlzykluskreis (90) und den Kühlkreis (91B) steuert, um die Kühlung/Lufterwärmung der Vorrichtung für einen elektrisch betriebenen Antrieb anhand der Temperatur, die die durch die Temperatur-Detektionseinheit (62, 63) detektiert worden ist, und der Solltemperatur, die durch die Solltemperatur-Änderungseinheit geändert worden ist, zu steuern.

2. Klimaanlagensystem für ein Fahrzeug nach Anspruch 1, wobei
die Vorhersageeinheit eine Vorlauftemperatur unter Berücksichtigung von Reiseplaninformationen vorhersagt, die von einer Navigationseinheit (68), die für das Fahrzeug vorgesehen ist, eingegeben werden.

3. Klimaanlagensystem für ein Fahrzeug nach Anspruch 1 oder 2, wobei
die Steuereinheit das Steuern der Kühlung/Lufterwärmung der Vorrichtung für einen elektrisch betriebenen Antrieb mit höherer Priorität als das Steuern der Kühlung/Lufterwärmung des Fahrzeuginnenraums durchführt, wenn eine Temperatur der Vorrichtung für einen elektrisch betriebenen Antrieb nahe bei einer Solltemperatur liegt.

## Revendications

1. Système de conditionnement d'air pour un véhicule, comprenant :
un circuit à cycle de réfrigération (90) ayant un compresseur (1) qui comprime un premier milieu de refroidissement (40) et un premier échangeur de chaleur (2) qui échange de la chaleur entre le premier milieu de refroidissement (40) et l'air extérieur ;
un circuit de refroidissement (91B) qui fait circuler un second milieu de refroidissement (41A, 41B) vers un équipement pour le pilotage à commande électrique, c'est-à-dire d'un objet commandant la température, pour effectuer un refroidissement/chauffage à l'air de l'équipement pour le pilotage à commande électrique ; et
un second échangeur de chaleur (4B) qui échange de la chaleur entre le premier milieu de refroidissement (40) et le second milieu de refroidissement (41A, 41B) ;
une unité de détection de température (62, 63) qui détecte une température de l'équipement pour le pilotage à commande électrique ;
un contrôleur qui commande le circuit à cycle de réfrigération (90) et le circuit de refroidissement (91B) sur la base d'une température détectée par l'unité de détection de température (62, 63, 64, 65) ;
**caractérisé en ce que** le système de conditionnement d'air comprend en outre :
une unité de prédiction qui prédit une température future du second milieu de refroidissement (41A, 41B) sur la base d'une température détectée par l'unité de détection de température (62-65), d'une amplitude d'enfoncement de pédale d'accélérateur, et de la vitesse du véhicule ; et
une unité de changement de température cible qui change une température cible du second milieu de refroidissement (41A, 41B) sur la base d'un résultat de prédiction par l'unité de prédiction ; dans lequel l'unité de changement de température cible change la température cible vers une température plus basse quand l'amplitude d'enfoncement de la pédale d'accélérateur est augmentée, et le contrôleur commande le circuit à cycle de réfrigération (90) et le circuit de refroidissement (91B) pour commander le refroidissement/chauffage à l'air de l'équipement pour le pilotage à commande électrique sur la base de la température détectée par l'unité de détection de température (62, 63) et de la température cible changée par l'unité de changement de température cible.

2. Système de conditionnement d'air pour un véhicule selon la revendication 1, dans lequel
l'unité de prédiction prédit une température future en prenant en considération une information sur un plan de voyage qui est entré depuis une unité de navigation (68) prévue dans le véhicule.

3. Système de conditionnement d'air pour un véhicule selon la revendication 1 ou 2, dans lequel
le contrôleur exécute une commande du refroidissement/chauffage à l'air de l'équipement le pilotage à commande électrique avec une priorité plus élevée par rapport à la commande du refroidissement/chauffage à l'air de l'intérieur du véhicule quand une température de l'équipement pour le pilotage à commande électrique est au voisinage de la température cible.
